# EUROPEAN PATENT APPLICATION

(11) **EP 4 794 386 A1**
(43) Date of publication of application: **19.08.2026**
(21) Application number: 24886261.7
(22) Date of filing: 30.10.2024
(51) Int. Cl.: H04W 28/16, H04W 72/044, H04W 72/53, H04B 7/06, H04W 88/08, H04W 92/04, H04W 72/0453, H04L 5/00, H04W 92/12

(54) **ELECTRONIC DEVICE AND METHOD FOR INDICATING ALLOCATED RESOURCE REGION**

(30) Priority: 30.10.2023 KR 20230147226; 17.01.2024 KR 20240007677
(71) Applicant: Samsung Electronics Co., Ltd., Suwon-si, Gyeonggi-do 16677 (KR)
(72) Inventor: KIM, Joonki, Suwon-si Gyeonggi-do 16677 (KR); KANG, Hyoseung, Suwon-si Gyeonggi-do 16677 (KR); OH, Jongho, Suwon-si Gyeonggi-do 16677 (KR)
(74) Representative: Gulde & Partner
(86) International application number: PCT/KR2024/016833
(87) International publication number: WO 2025/095589

(57) **Abstract**

According to one embodiment, a method performed by a device of a distributed unit (DU) comprises an operation of generating a control plane (C-plane) message including section information and section extension information for indicating a resource region. The method comprises an operation of transmitting the C-plane message to a radio unit (RU). The C-plane message indicates an allocated resource region for each port among a plurality of ports for a group configuration, within the resource region.

## Description

### [Technical Field]

The present disclosure relates to an electronic device and a method for indicating a resource allocation area.

### [Background Art]

As a transmission capacity increases in a wireless communication system, a function split for functionally splitting a base station is being applied. According to the function split, the base station may be separated into a distributed unit (DU) and a radio unit (RU). A fronthaul interface is defined for a communication between the DU and the RU.

The above-described information may be provided as a related art for the purpose of helping understanding of the present disclosure. No argument or decision is made as to whether any of the above description may be applied as a prior art related to the present disclosure.

### [Disclosure]

### [Technical Solution]

According to an embodiment, a method performed by a device of a distributed unit (DU) may comprise generating a control plane (C-plane) message including section information for indicating a resource area and section extension information. The method may comprise transmitting the C-plane message to a radio unit (RU). The C-plane message may indicate a resource allocation area for each port among multiple ports for a group configuration in the resource area.

According to an embodiment, a method performed by a device of a radio unit (RU) may comprise receiving, from a distributed unit (DU), a control plane (C-plane) message including section information for indicating a resource area and section extension information. The method may comprise identifying, based on the C-plane message, a resource allocation area for each port among multiple ports for a group configuration in the resource area.

According to an embodiment, a device of a distributed unit (DU) may comprise a fronthaul transceiver, memory storing instructions, and a processor. The instructions, when executed by the processor, may cause the device to generate a control plane (C-plane) message including section information for indicating a resource area and section extension information. The instructions, when executed by the processor, may cause the device to transmit, through the fronthaul transceiver, the C-plane message to a radio unit (RU). The C-plane message may indicate a resource allocation area for each port among multiple ports for a group configuration in the resource area.

According to an embodiment, a device of a radio unit (RU) may comprise a fronthaul transceiver, a radio frequency (RF) transceiver, memory storing instructions, and a processor. The instructions, when executed by the processor, may cause the device to receive, from a distributed unit (DU), a control plane (C-plane) message including section information for indicating a resource area and section extension information by using the fronthaul transceiver. The instructions, when executed by the processor, may cause the device to identify, based on the C-plane message, a resource allocation area for each port among multiple ports for a group configuration in the resource area.

### [Description of the Drawings]

FIG. 1 illustrates a wireless communication system.
FIG. 2A illustrates a fronthaul interface.
FIG. 2B illustrates a fronthaul interface of an open (O)-radio access network (RAN).
FIG. 3A illustrates a functional configuration of a distributed unit (DU).
FIG. 3B illustrates a functional configuration of a radio unit (RU).
FIG. 4 illustrates an example of a function split between a DU and an RU.
FIG. 5 illustrates an example of section information of a C-plane message.
FIGS. 6A and 6B illustrate an example of section extension information of a C-plane message including information on a group configuration for multiple ports.
FIG. 7A illustrates an example of an operation of an RU and a DU in Class A.
FIG. 7B illustrates an example of an operation of an RU and a DU in Class B.
FIG. 8 illustrates an example of an operation of a DU and an RU for receiving an uplink signal.
FIG. 9A illustrates an example of information for indicating a resource allocation area for each of multiple ports.
FIG. 9B illustrates an example of section extension information for indicating a resource allocation area for each of multiple ports.
FIG. 10A illustrates an example of information for indicating a resource allocation area for each of multiple ports.
FIG. 10B illustrates an example of information for indicating a resource allocation area for each of multiple ports.
FIG. 10C illustrates an example of section extension information for indicating a resource allocation area for each of multiple ports.
FIG. 10D illustrates an example of section extension information for indicating a resource allocation area for each of multiple ports.
FIG. 11A illustrates an example of information for indicating a resource allocation area for each of multiple ports.
FIG. 11B illustrates an example of section extension information for indicating a resource allocation area for each of multiple ports.
FIG. 12A illustrates an example of a scheme for indicating at least one resource block.
FIG. 12B illustrates an example of an indicator set according to a scheme for indicating at least one resource block.
FIG. 13 illustrates an example of a C-plane message for indicating at least one resource block allocated to each of multiple ports.
FIG. 14 illustrates an example of a C-plane message for indicating at least one resource block allocated to each of multiple ports.
FIG. 15 illustrates an example of a C-plane message for indicating at least one resource block allocated to each of multiple ports.
FIG. 16 illustrates an example of a C-plane message for indicating at least one resource block allocated to each of multiple ports.

### [Mode for Invention]

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

A term referring to a signal (e.g., signal, information, message, signaling), a term referring to a resource (e.g., symbol, slot, subframe, radio frame, subcarrier, resource element (RE), resource block (RB), bandwidth part (BWP), occasion) a term for a calculation state (e.g., step, operation, procedure), a term referring to data (e.g., packet, user stream, information, bit, symbol, codeword), a term referring to a channel, a term referring to a network entity, a term referring to a component of a device, and the like, that are used in the following description, are exemplified for convenience of description. Therefore, the present disclosure is not limited to terms to be described below, and another term having an equivalent technical meaning may be used.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, 'A' to 'B' refers to at least one of elements from A (including A) to B (including B). Hereinafter, 'C' and/or 'D' means including at least one of 'C' or 'D', that is, {'C', 'D', and 'C' and 'D'}.

Although the present disclosure describes various embodiments using terms used in some communication standards (e.g., 3rd Generation Partnership Project (3GPP), extensible radio access network (xRAN), open-radio access network (O-RAN)), these are only examples for explanation. The various embodiments of the present disclosure may be easily modified and applied to other communication systems.

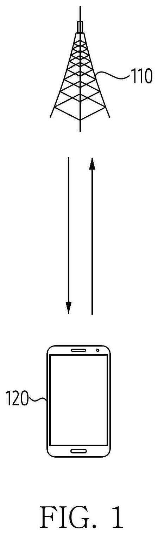

FIG. 1 illustrates a wireless communication system.

Referring to FIG. 1, FIG. 1 illustrates a base station 110 and a terminal 120 as a portion of nodes that utilize a wireless channel in a wireless communication system. FIG. 1 illustrates only one base station, but a wireless communication system may further include another base station that is identical or similar to the base station 110.

The base station 110 is a network infrastructure that provides wireless access to the terminal 120. The base station 110 has coverage defined based on a distance at which a signal may be transmitted. In addition to 'base station', the base station 110 may be referred to as an 'access point (AP)', 'eNodeB (eNB)', '5th generation node', 'next generation nodeB (gNB)', 'wireless point', 'transmission/reception point (TRP)' or other terms having equivalent technical meanings.

The terminal 120, which is a device used by a user, performs communication with the base station 110 through a wireless channel. A link from the base station 110 to the terminal 120 is referred to as a downlink (DL), and a link from the terminal 120 to the base station 110 is referred to as an uplink (UL). In addition, although not illustrated in FIG. 1, the terminal 120 and another terminal may perform communication with each other through a wireless channel. At this time, a link (device-to-device link (D2D)) between the terminal 120 and the other terminal is referred to as a sidelink, and the sidelink may be used interchangeably with a PC5 interface. In some other embodiments, the terminal 120 may be operated without the user's involvement. According to an embodiment, the terminal 120, which is a device performing machine type communication (MTC), may not be carried by the user. Additionally, according to an embodiment, the terminal 120 may be a narrowband (NB)-internet of things (IoT) device.

In addition to 'terminal', the terminal 120 may also be referred to as 'user equipment (UE) ', 'customer premises equipment, (CPE) ', 'mobile station', 'subscriber station', 'remote terminal', 'wireless terminal', 'electronic device', 'user device', or other terms having equivalent technical meanings.

The base station 110 may perform beamforming with the terminal 120. The base station 110 and the terminal 120 may transmit and receive a wireless signal in a relatively low frequency band (e.g., frequency range 1 (FR 1) of NR). In addition, the base station 110 and the terminal 120 may transmit and receive a wireless signal in a relatively high frequency band (e.g., FR 2 (or FR 2-1, FR 2-2, FR 2-3) or FR 3), and a mmWave band (e.g., 28GHz, 30GHz, 38GHz, 60GHz). The base station 110 and the terminal 120 may perform beamforming to improve a channel gain. Herein, the beamforming may include transmission beamforming and reception beamforming. The base station 110 and the terminal 120 may provide directivity to a transmission signal or a reception signal. To this end, the base station 110 and the terminal 120 may select serving beams through a beam search or beam management procedure. After the serving beams are selected, subsequent communication may be performed through a resource in a QCL relationship with the resource transmitting the serving beams.

If large-scale characteristics of a channel carrying a symbol on a first antenna port may be inferred from a channel carrying a symbol on a second antenna port, the first antenna port and the second antenna port may be evaluated to be in the QCL relationship. For example, large-scale characteristics may include at least one of a delay spread, a Doppler spread, a Doppler shift, an average gain, an average delay, and a spatial receiver parameter.

Although FIG. 1 describes that both the base station 110 and the terminal 120 perform beamforming, the embodiments of the present disclosure are not necessarily limited thereto. In some embodiments, the terminal may or may not perform beamforming. In addition, the base station may or may not perform beamforming. That is, either only one of the base station and the terminal may perform beamforming, or neither the base station nor the terminal may perform beamforming.

In the present disclosure, a beam refers to a spatial flow of a signal in a wireless channel, and is formed by one or more antennas (or antenna elements), and this formation process may be referred to as beamforming. Beamforming may include at least one of analog beamforming or digital beamforming (e.g., precoding). A reference signal transmitted based on beamforming may include, for example, a demodulation-reference signal (DM-RS), a channel state information-reference signal (CSI-RS), a synchronization signal/physical broadcast channel (SS/PBCH), and a sounding reference signal (SRS). In addition, an IE such as CSI-RS resource or SRS-resource may be used as a configuration for each reference signal, and this configuration may include information associated with the beam. The information associated with the beam may mean whether a corresponding configuration (e.g., CSI-RS resource) uses the same spatial domain filter as another configuration (e.g., another CSI-RS resource within the same CSI-RS resource set) or a different spatial domain filter, or which reference signal it is quasi-co-located (QCL) with, and if so, what type it is (e.g., QCL type A, B, C, D).

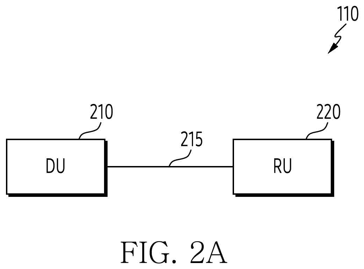

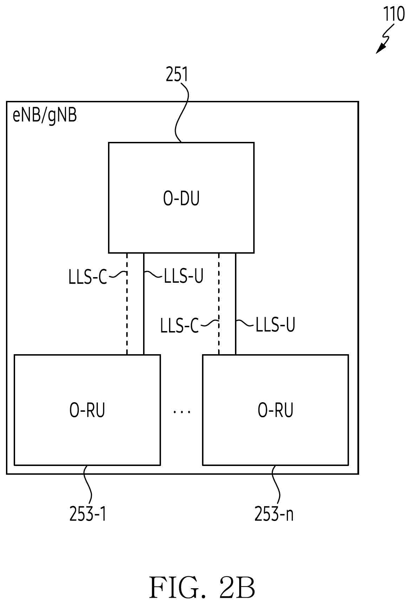

Conventionally, in a communication system with a relatively large cell radius of base station, each base station was installed to include a function of a digital processing unit (or distributed unit (DU)) and a radio frequency (RF) processing unit (or radio unit (RU)). However, as high frequency bands are used in 4th generation (4G) and/or subsequent communication systems (e.g., 5G) and the cell coverage of base stations is reduced, the number of base stations to cover a specific area has increased. The burden of installation cost for operators to install base stations has also increased. In order to minimize the installation cost of a base station, a structure in which the DU and RU of the base station are separated, one or more RUs are connected to one DU through a wired network, and one or more Rus geographically distributed to cover a specific area are deployed, has been proposed. Hereinafter, a deployment structure and expansion examples of a base station according to various embodiments of the present disclosure are described through FIGS. 2A and 2B.

FIG. 2A illustrates a fronthaul interface. Unlike a backhaul between a base station and a core network, the fronthaul refers to a link between entities between a wireless LAN and a base station. FIG. 2A illustrates an example of a fronthaul structure between one DU 210 and one RU 220, but this is only for convenience of explanation and the present disclosure is not limited thereto. In other words, the embodiments of the present disclosure may also be applied to a fronthaul structure between one DU and a plurality of RU. For example, the embodiments of the present disclosure may be applied to a fronthaul structure between one DU and two RU. In addition, the embodiments of the present disclosure may also be applied to a fronthaul structure between one DU and three RU.

Referring to FIG. 2A, the base station 110 may include a DU 210 and an RU 220. A fronthaul 215 between the DU 210 and the RU 220 may be operated via an Fx interface. For operation of the fronthaul 215, an interface such as an enhanced common public radio interface (eCPRI) or radio over ethernet (ROE) may be used.

As communication technology has been developed, mobile data traffic increased, and thus the bandwidth demand required in a fronthaul between a digital unit and a radio unit has increased significantly. In a deployment such as centralized/cloud radio access network (C-RAN), the DU may be implemented to perform functions for packet data convergence protocol (PDCP), radio link control (RLC), media access control (MAC), and physical (PHY), and the RU may be implemented to further perform functions for PHY layer in addition to a radio frequency (RF) function.

The DU 210 may be in charge of upper layer functions of a wireless network. For example, the DU 210 may perform functions of the MAC layer and a part of the PHY layer. Herein, a part of the PHY layer is a function performed at a higher level among the functions of the PHY layer, and may include, for example, channel encoding (or channel decoding), scrambling (or descrambling), modulation (or demodulation), and layer mapping (or layer demapping). According to an embodiment, if the DU 210 complies with an O-RAN standard, it may be referred to as an O-RAN DU (O-DU). The DU 210 may be replaced with and represented as a first network entity for a base station (e.g., gNB) in embodiments of the present disclosure, as needed.

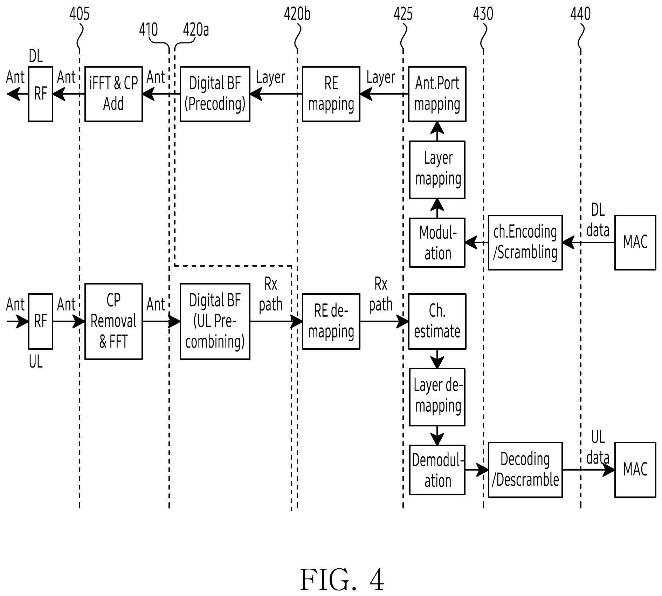

The RU 220 may be in charge of lower layer functions of a wireless network. For example, the RU 220 may perform a part of the PHY layer, and a RF function. Herein, a part of the PHY layer is a function performed at performed at a relatively lower level than the DU 210 among the functions of the PHY layer, and may include, for example, iFFT conversion (or FFT conversion), cyclic prefix (CP) insertion (or CP removal), and digital beamforming. In FIG. 4, an example of such a specific function split is described in detail. The RU 220 may be referred to as access unit (AU), access point (AP), transmission/reception point (TRP), remote radio head (RRH), radio unit (RU), or other terms having equivalent technical meanings. According to an embodiment, if the RU 220 complies with the O-RAN standard, it may be referred to as an O-RAN RU (O-RU). The RU 220 may be replaced with and represented as a second network entity for a base station (e.g., gNB) in embodiments of the present disclosure, as needed.

Although FIG. 2A describes that the base station 110 includes the DU 210 and the RU 220, the embodiments of the present disclosure are not limited thereto. The base station according to the embodiments may be implemented in a distributed deployment according to a centralized unit (CU) configured to perform functions of upper layers (e.g., packet data convergence protocol (PDCP), radio resource control (RRC)) of an access network and a distributed unit (DU) configured to perform functions of lower layers. At this time, the distributed unit (DU) may include the digital unit (DU) and the radio unit (RU) of FIG. 1. Between a core (e.g., 5G core (5GC) or next generation core (NGC)) network and a radio access network (RAN), the base station may be implemented in a structure in which CU, DU, and RU are arranged in order. An interface between the CU and the distributed unit (DU) may be referred to as an F1 interface.

A centralized unit (CU) may be in charge of functions of a higher layer than the DU, by being connected to one or more DUs. For example, the CU may be in charge of radio resource control (RRC) and a function of a packet data convergence protocol (PDCP) layer, and the DU and the RU may be in charge of functions of lower layers. The DU may perform radio link control (RLC), media access control (MAC), and some functions (high PHY) of PHY layer, and the RU may perform remaining functions (low PHY) of the PHY layer. In addition, as an example, a digital unit (DU) may be included in a distributed unit (DU) according to the implementation of distributed deployment of the base station. Hereinafter, unless otherwise defined, it is described as operations of the digital unit (DU) and the RU, but various embodiments of the present disclosure may be applied to both of a base station arrangement including the CU or an arrangement where the DU is directly connected to a core network (i.e., the CU and the DU are integrated into a base station (e.g., NG-RAN node) which is a single entity).

FIG. 2B illustrates a fronthaul interface of an open (O)-radio access network (RAN). As a base station 110 according to distributed deployment, eNB or gNB is exemplified.

Referring to FIG. 2B, the base station 110 may include an O-DU 251 and O-RUs 253-1, ..., and 253-n. Hereinafter, for convenience of explanation, an operation and a function of the O-RU 253-1 may be understood as a description of each of other O-RUs (e.g., O-RU 253-n).

The O-DU 251 is a logical node including functions among functions of a base station (e.g., eNB, gNB) according to FIG. 4 to be described later, except for functions allocated exclusively to the O-RU 253-1. The O-DU 251 may control operations of the O-RUs 253-1, ..., and 253-n. The O-DU 251 may be referred to as a lower layer split (LLS) central unit (CU). The O-RU 253-1 is a logical node including a subset among the functions of a base station (e.g., eNB, gNB) according to FIG. 4 to be described later. The real-time aspect of the control plane (C-plane) communication and user plane (U-plane) communication with the O-RU 253-1 may be controlled by the O-DU 251.

The O-DU 251 may perform communication with the O-RU 253-1 through an LLS interface. The LLS interface corresponds to a fronthaul interface. The LLS interface refers to a logical interface between the O-DU 251 and the O-RU 253-1 using lower layer functional split (i.e., intra-PHY-based functional split). The LLS-C between the O-DU 251 and the O-RU 253-1 provides a C-plane through the LLS interface. The LLS-U between the O-DU 251 and the O-RU 253-1 provides a U-plane through the LLS interface.

In FIG. 2B, entities of the base station 110 have been described as O-DU and O-RU to describe O-RAN. However, these designations are not to be construed as limiting the embodiments of the present disclosure. In embodiments described below, operations of the DU 210 may also be performed by the O-DU 251. A description of the DU 210 may be applied to the O-DU 251. Likewise, in embodiments described below, operations of the RU 220 may also be performed by the O-RU 253-1. A description of the RU 220 may be applied to the O-RU 253-1.

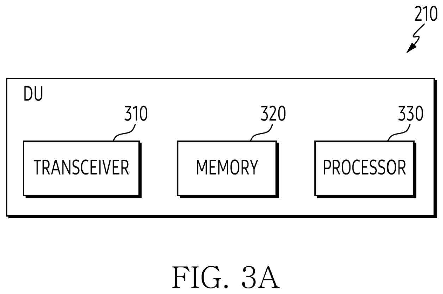

FIG. 3A illustrates a functional configuration of a distributed unit (DU). A configuration exemplified in FIG. 3A, which is as a part of a base station, may be understood as a configuration of the DU 210 of FIG. 2A (or the O-DU 251 of FIG. 2B). Hereinafter, the terms '...unit' and '...er' used below refer to a unit processing at least one function or operation, which may be implemented by hardware or software, or a combination of hardware and software.

Referring to FIG. 3A, a DU 210 includes a transceiver 310, memory 320, and a processor 330.

The transceiver 310 may perform functions for transmitting and receiving a signal in a wired communication environment. The transceiver 310 may include a wired interface for controlling a direct device-to-device connection through a transmission medium (e.g., copper wire, optical fiber). For example, the transceiver 310 may transmit an electrical signal to another device through a copper wire or perform conversion between an electrical signal and an optical signal. The DU 210 may communicate with a radio unit (RU) through the transceiver 310. The DU 210 may be connected to a core network or a CU of a distributed deployment through the transceiver 310.

The transceiver 310 may also perform functions for transmitting and receiving a signal in a wireless communication environment. For example, the transceiver 310 may perform a conversion function between a baseband signal and a bit string according to a physical layer specification of a system. For example, upon transmitting data, the transceiver 310 generates complex-valued symbols by encoding and modulating a transmission bit string. In addition, upon receiving data, the transceiver 310 restores a received bit string by demodulating and decoding a baseband signal. In addition, the transceiver 310 may include a plurality of transmission/reception paths. In addition, according to an embodiment, the transceiver 310 may be connected to a core network or to other nodes (e.g., integrated access backhaul (IAB)).

The transceiver 310 may transmit and receive a signal. For example, the transceiver 310 may transmit a management plane (M-plane) message. For example, the transceiver 310 may transmit a synchronization plane (S-plane) message. For example, the transceiver 310 may transmit a control plane (C-plane) message. For example, the transceiver 310 may transmit a user plane (U-plane) message. For example, the transceiver 310 may receive the U-plane message. Although only the transceiver 310 is illustrated in FIG. 3A, the DU 210 may include two or more transceivers according to another implementation.

The transceiver 310 transmits and receives a signal as described above. Accordingly, all or some of the transceiver 310 may be referred to as a 'communication unit', a 'transmission unit', a 'reception unit', or a 'transmission/reception unit'. In addition, in the following description, transmission and reception performed through a wireless channel are used to the meaning including that the processing as described above is performed by the transceiver 310.

Although not illustrated in FIG. 3A, the transceiver 310 may further include a backhaul transceiver for connection with a core network or another base station. The backhaul transceiver provides an interface for performing communication with other nodes in the network. In other words, the backhaul transceiver converts a bit string transmitted from a base station to another node, such as another access node, another base station, an upper node, and a core network into a physical signal, and converts a physical signal received from another node into a bit string.

The memory 320 stores a basic program, an application program, and data such as configuration information for an operation of the DU 210. The memory 320 may be referred to as a storage unit. The memory 320 may be configured with a volatile memory, a nonvolatile memory, or a combination of the volatile memory and the nonvolatile memory. In addition, the memory 320 provides stored data according to a request from the processor 330.

The processor 330 controls overall operations of the DU 210. The processor 380 may be referred to as a control unit. For example, the processor 330 transmits and receives a signal through the transceiver 310 (or through a backhaul communication unit). In addition, the processor 330 writes and reads data in the memory 320. In addition, the processor 330 may perform functions of a protocol stack required in a communication standard. Although only the processor 330 is illustrated in FIG. 3A, the DU 210 may include two or more processors according to another implementation.

A configuration of the DU 210 illustrated in FIG. 3A is only an example, and an example of the DU performing the embodiments of the present disclosure is not limited to the configuration illustrated in FIG. 3A. In some embodiment, some configurations may be added, deleted, or changed.

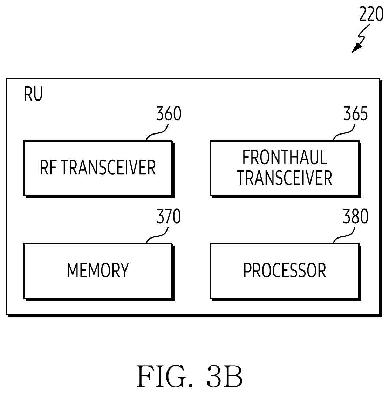

FIG. 3B illustrates a functional configuration of a radio unit (RU). A configuration exemplified in FIG. 3B, which is as a part of a base station, may be understood as a configuration of the RU 220 of FIG. 2B or the O-RU 253-1 of FIG. 2B. Hereinafter, the terms '...unit' and '...er' used below refer to a unit processing at least one function or operation, which may be implemented by hardware or software, or a combination of hardware and software.

Referring to FIG. 3B, the RU 220 includes an RF transceiver 360, a fronthaul transceiver 365, memory 370, and a processor 380.

The RF transceiver 360 performs functions for transmitting and receiving a signal through a wireless channel. For example, the RF transceiver 360 up-converts a baseband signal into an RF band signal and then transmits it through an antenna, and down-converts an RF band signal received through the antenna into a baseband signal. For example, the RF transceiver 360 may include a transmission filter, a reception filter, an amplifier, a mixer, an oscillator, a DAC, an ADC.

The RF transceiver 360 may include a plurality of transmission/reception paths. Furthermore, the RF transceiver 360 may include an antenna unit. The RF transceiver 360 may include at least one antenna array composed of a plurality of antenna elements. In terms of hardware, the RF transceiver 360 may be composed of a digital circuit and an analog circuit (e.g., a radio frequency integrated circuit (RFIC)). Herein, the digital circuit and the analog circuit may be implemented as a single package. In addition, the RF transceiver 360 may include a plurality of RF chains. The RF transceiver 360 may perform beamforming. In order to provide directivity to a signal to be transmitted and received according to the setting of the processor 380, the RF transceiver 360 may apply beamforming weights to the signal. According to an embodiment, the RF transceiver 360 may include a radio frequency (RF) block (or RF unit).

According to an embodiment, the RF transceiver 360 may transmit and receive a signal on a radio access network. For example, the RF transceiver 360 may transmit a downlink signal. The downlink signal may include a synchronization signal (SS), a reference signal (RS) (e.g., cell-specific reference signal (CRS), demodulation (DM)-RS), system information (e.g., MIB, SIB, remaining system information (RMSI), other system information (OSI)), configuration message, control information or downlink data. In addition, for example, the RF transceiver 360 may receive an uplink signal. The uplink signal may include a random access-related signal (e.g., random access preamble (RAP)) (or message 1 (Msg1), message 3 (Msg3)), a reference signal (e.g., sounding reference signal (SRS), DM-RS), or a power headroom report (PHR). Although only the RF transceiver 360 is illustrated in FIG. 3B, the RU 220 may include two or more RF transceivers according to another implementation.

According to embodiments, the RF transceiver 460 may transmit an RIM-RS. The RF transceiver 460 may transmit a first type of RIM-RS (e.g., RIM-RS type 1 of 3GPP) to inform the detection of remote interference. The RF transceiver 460 may transmit a second type of RIM-RS (e.g., RIM-RS type 2 of 3GPP) to inform the presence or absence of remote interference.

The fronthaul transceiver 365 may transmit and receive a signal. According to an embodiment, the fronthaul transceiver 365 may transmit and receive a signal on a fronthaul interface. For example, the fronthaul transceiver 365 may receive a management plane (M-plane) message. For example, the fronthaul transceiver 365 may receive a synchronization plane (S-plane) message. For example, the fronthaul transceiver 365 may receive a control plane (C-plane) message. For example, the fronthaul transceiver 365 may transmit a user plane (U-plane) message. For example, the fronthaul transceiver 365 may receive a U-plane message. Although only the fronthaul transceiver 365 is illustrated in FIG. 3B, the RU 220 may include two or more fronthaul transceivers according to another implementation.

As described above, the RF transceiver 360 and the fronthaul transceiver 365 transmit and receive a signal. Accordingly, all or some of the RF transceiver 360 and the fronthaul transceiver 365 may be referred to as a 'communication unit', a 'transmission unit', a 'reception unit', or a 'transmission/reception unit'. In addition, in the following description, transmission and reception performed through a wireless channel are used to the meaning including that the processing as described above is performed by the RF transceiver 360. In the following description, transmission and reception performed through a wireless channel are used to the meaning including that the processing as described above is performed by the RF transceiver 360.

The memory 370 stores a basic program, an application program, and data such as configuration information for an operation of the RU 220. The memory 370 may be referred to as a storage unit. The memory 370 may be configured with a volatile memory, a nonvolatile memory, or a combination of the volatile memory and the nonvolatile memory. In addition, the memory 370 provides stored data according to a request from the processor 380. According to an embodiment, the memory 370 may include a memory for a condition, a command, or a setting value related to an SRS transmission scheme.

The processor 380 controls overall operations of the RU 220. The processor 380 may be referred to as a control unit. For example, the processor 380 transmits and receives a signal through the RF transceiver 360 or the fronthaul transceiver 365. In addition, the processor 380 writes and reads data in the memory 370. In addition, the processor 380 may perform functions of a protocol stack required by a communication standard. Although only the processor 380 is illustrated in FIG. 3B, the RU 220 may include two or more processors according to another implementation. The processor 380, which is an instruction set or code stored in the memory 370, may be an instruction/code at least temporarily resided in the processor 380 or a storage space storing instruction/code, or part of circuitry constituting the processor 380. In addition, the processor 380 may include various modules for performing communication. The processor 380 may control the RU 220 to perform operations according to embodiments to be described later.

A configuration of the RU 220 illustrated in FIG. 3B is only an example, and an example of the RU performing the embodiments of the present disclosure is not limited to the configuration illustrated in FIG. 3B. In some embodiment, some configurations may be added, deleted, or changed.

FIG. 4 illustrates an example of a function split between a DU and an RU according to embodiments. As wireless communication technology advances (e.g., the introduction of 5th generation (5G) communication system (or new radio (NR) communication system)), the used frequency bands have increased further. As a cell radius of base stations became very small, the number of RUs required to be installed further increased. In addition, in the 5G communication system, as the amount of data transmitted has increased significantly by more than 10 times, a transmission capacity of a wired network transmitted to a fronthaul has increased significantly. Due to the above-described factors, the installation cost of a wired network in the 5G communication system may be increased significantly. Therefore, in order to reduce the transmission capacity of the wired network and reduce the installation cost of the wired network, a 'function split' to reduce a transmission capacity of the fronthaul by transferring some functions of the DU's modem to the RU may be used.

In order to reduce the burden on the DU, a role of the RU, which was in charge of only the existing RF function, may be extended to include some functions of a physical layer. As the RU performs functions of the higher layer, the throughput of the RU increases, which may increase a transmission bandwidth in the fronthaul while lowering the delay time requirement constraints due to response processing. On the other hand, as the RU performs the functions of the higher layer, a virtualization gain decreases and the size, weight, and cost of the RU increase. In consideration of the trade-off of the above-described advantages and disadvantages, it is required to implement an optimal function split.

Referring to FIG. 4, function splits in a physical layer below a MAC layer are illustrated. In a case of downlink (DL) transmitting signals to a terminal through a wireless network, a base station may sequentially perform channel encoding/scrambling, modulation, layer mapping, antenna mapping, RE mapping, digital beamforming (e.g., precoding), iFFT conversion/CP insertion, and RF conversion. In a case of uplink (UL) receiving signals from a terminal through the wireless network, the base station may sequentially perform RF conversion, FFT conversion/CP removal, digital beamforming (pre-combining), RE demapping, channel estimation, layer demapping, demodulation, decoding/discrambling. According to the above-described trade-off, the split of uplink functions and downlink functions may be defined in various types, by needs among vendors, discussion of standards, and the like.

In a first function split 405, the RU performs the RF function, and the DU performs the PHY function. The first function split is substantially such that the PHY function is not implemented within the RU, and as an example, it may be referred to as Option 8. In a second function split 410, the RU performs iFFT conversion/CP insertion in the DL of the PHY function and FFT conversion/CP removal in the UL, and the DU performs the remaining PHY functions. As an example, the second function split 410 may be referred to as Option 7-1. In a third function split 420a, the RU performs iFFT conversion/CP insertion in the DL of the PHY function and FFT conversion/CP removal and digital beamforming in the UL, and the DU performs the remaining PHY functions. As an example, the third function split 420a may be referred to as Option 7-2x Category A. In a fourth function split 420b, the RU performs digital beamforming in both DL and UL, and the DU performs upper PHY functions after digital beamforming. As an example, the fourth function split 420b may be referred to as Option 7-2x Category B. In a fifth function split 425, the RU performs RE mapping (or RE demapping) in both DL and UL, and the DU performs upper PHY functions after RE mapping (or RE demapping). As an example, the fifth function split 425 may be referred to as Option 7-2. In a sixth function split 430, the RU performs up to modulation (or demodulation) in both DL and UL, and the DU performs upper PHY functions after modulation (or demodulation). As an example, the sixth function split 430 may be referred to as Option 7-3. In a seventh function split 440, the RU performs up to encoding/scrambling (or decoding/discrambling) in both DL and UL, and the DU performs upper PHY functions after modulation (or demodulation). As an example, the seventh function split 440 may be referred to as option 6.

According to an embodiment, in a case that a large amount of signal processing is expected, such as in FR 1 MMU, a function split (e.g., the fourth function split 420b) in a relatively high layer may be required to reduce a fronthaul capacity. Additionally, in a function split (e.g., the sixth function split 430) at a too high layer, as a control interface becomes complex and multiple PHY processing blocks are included in the RU, which may cause a burden on the implementation of the RU, a suitable function split may be required according to the arrangement and implementation method of the DU and RU.

According to an embodiment, in a case that precoding of data received from the DU cannot be processed (i.e., in a case that there is a limit to the precoding capability of the RU), the third function split 420a or a lower function split (e.g., the second function split 410) may be applied. Conversely, in a case that there is a capability to process precoding of data received from the DU, the fourth function split 420b or a higher function split (e.g., the sixth function split 430) may be applied.

Hereinafter, unless otherwise specified, the embodiments in the present disclosure are described based on the third function split 420a (it may be referred to as category A (CAT-A)), or the fourth function split 420b (it may be referred to as category B (CAT-B)) for performing beamforming processing in the RU. In the O-RAN standard, the type of O-RU is distinguished according to whether the precoding function is located at an interface of the O-DU or an interface of the O-RU. An O-RU in which precoding is not performed (i.e., low complexity) may be referred to as a CAT-A O-RU. An O-RU in which precoding is performed may be referred to as a CAT-B O-RU.

Hereinafter, an upper PHY means a physical layer processing processed in a DU of a fronthaul interface. For example, the upper-PHY may include FEC encoding/decoding, scrambling, modulation/demodulation. Hereinafter, a lower-PHY means a physical layer processing processed in an RU of the fronthaul interface. For example, the lower-PHY may include FFT/iFFT, digital beamforming, physical random access channel (PRACH) extraction, and filtering. However, the above-described criteria do not exclude embodiments through other function splits. Functional configurations, signaling, or operations of embodiments, may be applied not only to the third function split 420a or the fourth function split 420b, but also to other function splits.

The embodiments of the present disclosure exemplarily describe standards of eCPRI and O-RAN as a fronthaul interface when transmitting a message between a DU (e.g., the DU 210) of FIG. 2A) and an RU (e.g., the RU 220 of FIG. 2A). The Ethernet payload of the message may include an eCPRI header, an O-RAN header, and an additional field. Hereinafter, various embodiments of the present disclosure are described using standard terms of eCPRI or O-RAN, but other expressions having equivalent meanings to each term may be used as substitutes in various embodiments of the present disclosure. Hereinafter, various embodiments of the present disclosure are described using the standard term of eCPRI or O-RAN, but are not limited thereto. For example, in various embodiments of the present disclosure, a CPRI standard may be used as a fronthaul interface.

Ethernet and eCPRI, which are easy to share with networks, may be used as a transport protocol of fronthaul. The eCPRI header and the O-RAN header may be included in the Ethernet payload. The eCPRI header may be located at the front of the Ethernet payload. The eCPRI header has the following contents.
1) ecpriVersion (4 bits): This parameter indicates an eCPRI protocol version.
2) ecpriReserved (3 bits): This parameter is reserved for further use of eCPRI.
3) ecpriConcatenation (1 bit): This parameter indicates when eCPRI concatenation is in use.
4) ecpriMessage (1 byte): This parameter indicates a type of a service carried by a message type. For example, the parameter indicates an IQ data message, a real-time control data message, or a transport network delay measurement message.
5) ecpriPayload (2 bytes): This parameter indicates a byte size of a payload portion of the eCPRI message.
6) ecpriRtcid/ecpriPcid (2 bytes): This parameter is an extended Antenna-carrier (eAxC) identifier (eAxC ID) and identifies a specific data flow related to each of C-plane (ecpriRtcid) or U-plane (ecpriPcid) message.
7) ecpriSeqid (2 bytes): This parameter provides unique message identification and order at two levels. The first octet of this parameter is a sequence ID used to identify the order of messages within an eAxC message stream, and the sequence ID is used to ensure that all messages are received and to reorder out-of-order messages. The second octet of this parameter is a subsequence ID. The subsequence ID is used to verify ordering and implement reordering when radio-transport-level (eCPRI or IEEE-1914.3) fragmentation occurs.

The eAxC identifier (ID) includes a band and sector identifier ('BandSector_ID'), a component carrier identifier ('CC_ID'), a spatial stream identifier ('RU_Port_ID'), and a distributed unit identifier ('DU_Port_ID'). The bit allocation of the eAxC ID may be distinguished as follows.
1) DU_port ID: The DU_port ID is used to distinguish processing units in the O-DU (e.g. different baseband cards). It is expected that the O-DU will allocate bits for the DU_port ID and the O-RU will attach the same value to the UL U-plane message carrying the same sectionId data.
2) BandSector_ID: Aggregated cell identifier (identification of band and sector supported by O-RU).
3) CC_ID: CC_ID identifies carrier components supported by the O-RU.
4) RU_port ID: The RU_port ID designates logical flows such as data layer or spatial streams, and logical flows such as separate numerologies (e.g., PRACH) or signal channels like SRS requiring specific antenna assignments.

An application protocol of the fronthaul may include a control plane (C-plane), a user plane (U-plane), a synchronization plane (S-plane), and a management plane (M-plane).

The control plane may be configured to provide scheduling information and beamforming information via a control message. The control plane means real-time control between the DU and the RU. The user plane may include IQ sample data transmitted between the DU and the RU. The user plane may include downlink data (IQ data or SSB/RS), uplink data (IQ data or SRS/RS), or PRACH data of the user. A weight vector of the beamforming information described above may be multiplied by the user's data. The synchronization plane generally means traffic between the DU and the RU for a synchronization controller (e.g., IEEE grand master). The synchronization plane may be related to timing and synchronization. The management plane means non-real-time control between the DU and the RU. The management plane may be related to initial setup, non-realtime reset or reset, and non-realtime report.

A message in the control plane, that is, the C-plane message, may be encapsulated based on a two-layer header approach. A first layer may be configured with eCPRI common header or the IEEE 1914.3 common header, which includes fields used to indicate a message type. A second layer is an application layer, which includes fields necessary for control and synchronization. In the application layer, a section defines a characteristic of U-plane data transmitted or received on a beam with one pattern ID. The section types supported within the C-plane are as follows.

Section Type may indicate the purpose of the control message transmitted in the control plane. For example, the purposes of Section Type are as follows.
1) sectionType=0: Used to indicate resource blocks or symbols not used in the DL or the UL.
2) sectionType=1: Used for most DL/UL wireless channels. Herein, "most" refers to channels that do not require time or frequency offsets such as those required for mixed numerology channels.
3) sectionType=2: reserved for further use
4) sectionType=3: PRACH and mixed-numerology channels. Channels that require time or frequency offsets or differ from the nominal SCS value(s).
5) sectionType=4: reserved for further use
6) sectionType=5: UE scheduling information. Transmits UE scheduling information so that the RU can perform real-time BF weight calculation (O-RAN optional BF method)
7) sectionType=6: Transmit UE-specific channel information. Periodically transmits UE channel information so that the RU can perform real-time BF weight calculation (O-RAN optional BF method)
8) sectionType=7: Used for LAA support

According to an embodiment, a control plane (C-plane) message (hereinafter, a C-plane message) may include section information and/or section extension information. The section information may be configured based on one section type among a plurality of section types. The section extension information may be configured based on one section extension type among a plurality of section extension types. For example, the section information may include a beam identifier (ID) for one port and/or information on a resource area for a section. The section extension information may include information on a group configuration for multiple ports.

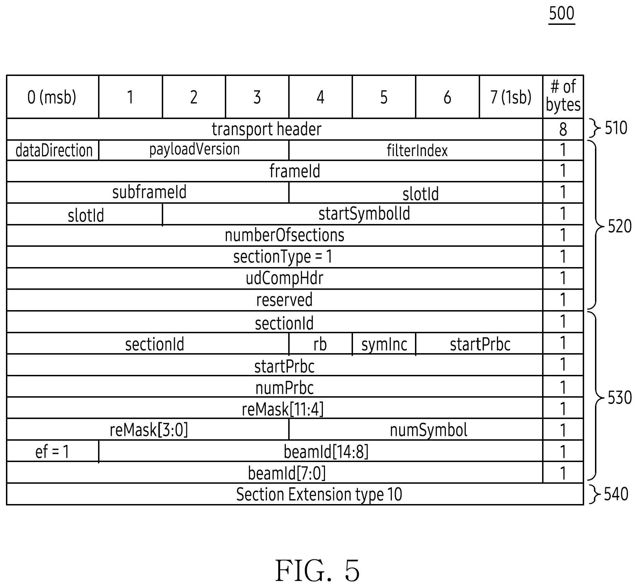

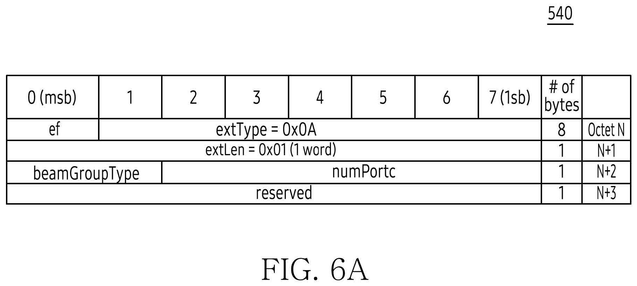

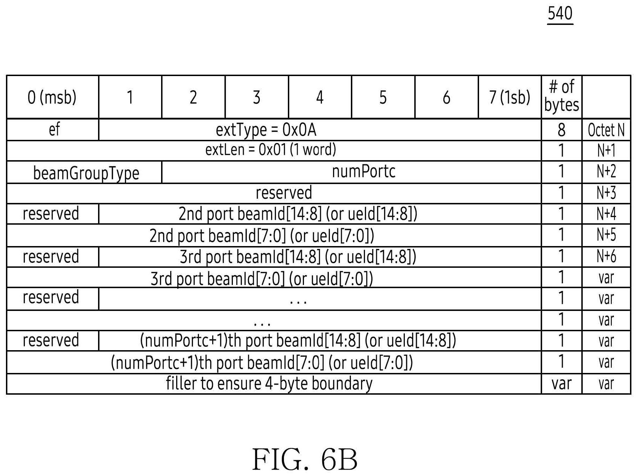

In FIG. 5, an example of section information of a C-plane message including a beam identifier (ID) for one port and/or information on a resource area for a section will be described. In FIGS. 6A and 6B, an example of section extension information of a C-plane message including information on a group configuration for multiple ports will be described.

FIG. 5 illustrates an example of section information of a C-plane message.

Referring to FIG. 5, section information 530 of a C-plane message 500 may include a beam identifier (ID) for one port and/or information on a resource area for a section. The section information 530 including the beam identifier (ID) for one port and/or the information on the resource area for the section may be included in the C-plane message 500 configured based on one section type among a plurality of section types (e.g., section types 1, 3, and 5).

In FIG. 5, an example in which the section information 530 including the beam identifier (ID) for one port and/or the information on the resource area for the section is included in the C-plane message 500 configured based on a section type 1 is described, but is not limited thereto. For example, the section information 530 including the beam identifier (ID) for one port and/or the information on the resource area for the section may also be included in the C-plane message configured based on one among a plurality of section types (e.g., section types 1 to 8).

Referring to FIG. 5, the C-plane message 500 may include transport header (e.g., an eCPRI header or IEEE 1914.3) information 510, common header information 520, section information 530, and section extension information 540. The transport header may include the above-described 'ecpriVersion', 'ecpriReserved', 'ecpriConcatenation', 'ecpriMessage', 'ecpriPayload', 'ecpriRtcid/ecpriPcid', and 'ecpriSeqid'.

The common header information 520 may include 'dataDirection' indicating a data transmission direction of a base station (e.g., a gNB), 'payloadVersion' indicating a valid payload protocol version of IEs at an application layer, and 'filterindex' meaning an index for a channel filter between IQ data and an air interface, to be used in both DL and UL.

The common header information 520 may include information for indicating a position of a time resource to which a message is applicable. The position of the time resource may be indicated by a frame, a subframe, a slot, or a symbol. The common header information 520 may include 'frameId' indicating a frame number, 'subframeId' indicating a subframe number, 'slotId' indicating a slot number, and 'startSymblId' indicating a symbol number. The frame is determined based on a modulo 256 operation. The subframe has a unit of 1 ms included in a frame of 10 ms. The slot number is numbered in the subframe, and a maximum size thereof may be 1, 2, 4, 8, or 16 according to a numerology.

The common header information 520 may include 'numberOfsections' indicating the number of data sections (hereinafter, a section) included in the C-plane message. The common header information 520 may include 'sectionType' determining a characteristic of C-plane data. According to an embodiment, 'sectionType' of the common header information 520 may indicate 1. However, the section type indicating 1 is only an embodiment, and it does not mean that section extension type information 540 according to embodiments of the present disclosure may not be applied to another section type (2, 3, 4, ...).

The section information 530, which is information per layer, may include information on a resource allocated in one slot (e.g., 14 symbols). A section in a C-plane and a U-plane may mean an area to which resources are allocated. For example, one section may indicate a resource area for N RBs in a frequency domain (e.g., when according to a current NR standard, N is from 1 to 273) and M symbols in a time domain (e.g., when according to a current NR standard, N is from 1 to 14) in a resource grid represented by a time-frequency resource.

The section information 530 may include 'sectionId' meaning a section identifier. The section information 530 may include 'rb' indicating whether every RB is used or every other RB is used, 'symInc' meaning a symbol number increment command, 'startPrbc' for indicating a start PRB number of a data section description, 'numPrbc' for indicating the number of consecutive PRBs for each data section description, 'reMask' defining an RE mask in a PRB, 'numSymbol' defining the number of physical random access channel (PRACH) repetitions or the number of symbols to which section control is applied, 'ef' for indicating an extension flag, and 'beamId' defining a beam pattern to be applied to U-plane data. For example, as a value of 'ef' is set to 1, the section extension information 540 may be included in the C-plane message 500. The section extension information 540 may be selectively included in the C-plane message 500 according to the value of 'ef'.

For example, the section extension information 540 may include information on a group configuration for multiple ports. The section extension information 540 may be configured based on at least one section extension type among a plurality of section extension types. As an example, the section extension information 540 may be configured based on a section extension type 10. Hereinafter, in FIGS. 6A and 6B, an example of the section extension information 540 of the C-plane message including information on a group configuration for multiple ports will be described.

FIGS. 6A and 6B illustrate an example of section extension information of a C-plane message including information on a group configuration for multiple ports.

Referring to FIGS. 6A and 6B, section extension information 540 of a C-plane message may include information on a group configuration for multiple ports. The section extension information 540 may be configured for the group configuration for the multiple ports. The section extension information 540 including the information on the group configuration for the multiple ports may be configured based on one section extension type among a plurality of section extension types (e.g., section extension types 1 to 23).

In FIGS. 6A and 6B, an example in which the section extension information 540 including the information on the group configuration for the multiple ports is configured based on a section extension type 10 is described, but is not limited thereto. The section extension information 540 including the information on the group configuration for the multiple ports may also be configured based on one (or at least one) among the plurality of section extension types (e.g., the section extension types 1 to 23).

Referring to FIGS. 6A and 6B, the section extension information 540 may include 'extType' providing an extension type providing additional parameters. The section extension information 540 may include 'ef' indicating whether there is another extension present or whether a current extension field is a last extension. The section extension information 540 may include 'extLen' providing a length of a section extension in units of 32-bit (or 4-byte) words.

For example, the section extension information 540 may include 'beamGroupType' indicating a type of beam grouping. The 'beamGroupType' may be configured with 2 bits. When the 'beamGroupType' is set to '00' (or '00b', '0') or '01' (or '01b', '1'), the section extension information 540 may be configured as shown in FIG. 6A. When the 'beamGroupType' is set to '10' (or '10b' or '2'), the section extension information 540 may be configured as shown in FIG. 6B.

Referring to FIG. 6A, the section extension information 540 may include 'numPortc' indicating the number of eAxC ports indicated by a section extension.

For example, when the 'beamGroupType' is set to '00' (or '00b', '0'), 'BeamID' included in section information (e.g., the section information 530 of FIG. 5) (or a section header) may be used as a common beam identifier for ports according to all 'numPortc' grouped as an M-Plane.

For example, when the 'beamGroupType' is set to '01' (or '01b', '1'), a beam identifier of consecutive 'numPortc' following 'BeamID' included in section information (e.g., the section information 530 of FIG. 5) (or the section header) may be applied to ports according to the 'numPortc'.

Referring to FIG. 6B, when the 'beamGroupType' is set to '10' (or '10b', '2'), the section extension information 540 may include a beam identifier (e.g., '2nd port beamId' to '(numPortc+1)th port beamID') (or a user equipment identifier ('ueId')) for ports according to the 'numPortc'.

Referring to FIGS. 6A and 6B, when the section extension information 540 is not used, section information (e.g., the section information 530 of FIG. 5) included in a C-plane message (e.g., the section information 530 of FIG. 5) may designate one endpoint (or port or user equipment). A DU 210 may receive one U-plane message by using the C-plane message. In order to designate a plurality of endpoints (or a plurality of ports, a plurality of user equipments) through a C-plane message including the same information, the DU 210 should repeatedly transmit the same information to an RU 220. In order to prevent a repeated operation, the section extension information 540 may be transmitted. The section extension information 540 may designate the number of added endpoints (or ports or user equipments) through the 'numPortc', and the section extension information 540 may indicate a beam identifier ('beamID') or a user equipment identifier ('ueID') corresponding to the added endpoints (or ports or user equipments).

A beam identifier and/or a user equipment identifier to be applied to a plurality of endpoints (or a plurality of ports, a plurality of user equipments) may be indicated through the section extension information 540. For the plurality of endpoints (or the plurality of ports, the plurality of user equipments), 'rb', 'symInc', 'startPrbc', 'numPrbc', 'reMask', and/or 'numSymbol' indicated by section information (e.g., the section information 530 of FIG. 4) may be identically set. Scheduling information transmitted to a user equipment connected to the RU 220 may be transmitted through a PDCCH. Scheduling information on a PUSCH processable in a base station (e.g., the DU 210 and the RU 220) may be transmitted to a user equipment.

In a case of user equipments scheduled based on multiple user - multiple input multiple output (MU-MIMO), 'startPrbc' and 'numPrbc' of each of the user equipments may be differently set. In this case, a C-plane message may not be optimized through the existing section extension information 540. The DU 210 may differently set the 'startPrbc' and the 'numPrbc' of each of the user equipments by transmitting a plurality of C-plane messages including section information to the RU 220. However, the RU 220 should perform a MU-MIMO combining operation based on combining all of the plurality of C-plane messages. However, when a C-plane message is out of an Ethernet standard payload, packet segmentation occurs, and thus a combining operation may be impossible.

In addition, a C-plane message 500 may include basic information on a processing value of a DL PHY level signal to be transmitted the RU 220 should transmit to a user equipment and basic information on a processing value of a UL PHY level signal that the RU 220 should transmit to the DU 210. The RU 220 may transmit an in-phase (I) value and a quadrature-phase (Q) value of an uplink received from the user equipment to the DU 210. Since the DU 210 operates based on at least a portion of the I value and the Q value received from the RU 220, a transmission area of the user equipment and an operation area of the RU 220 may not coincide with each other.

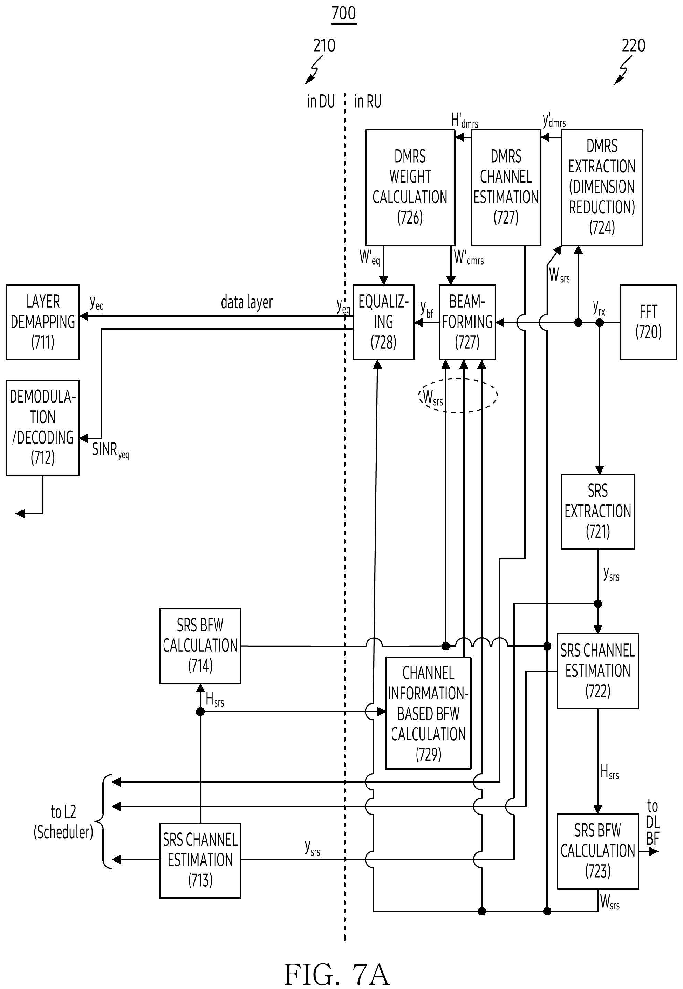

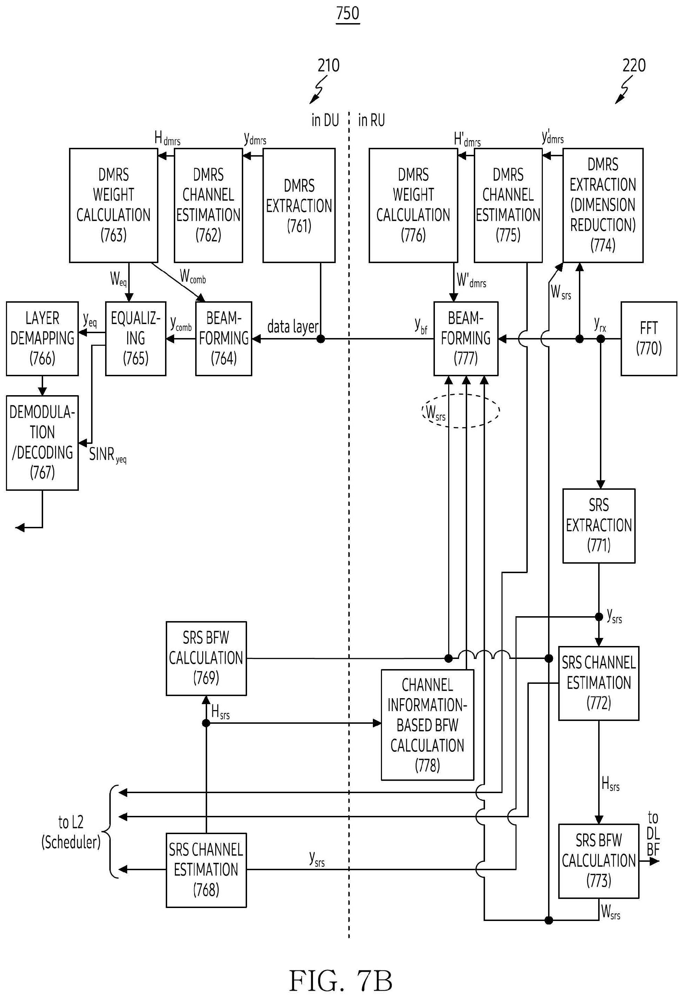

When at least one function related to uplink performance improvement (ULPI) is performed in the RU 220, the RU 220 may not accurately know an RB size of an uplink signal (e.g., a PUSCH) of the user equipment. In addition, the RU 220 may not perform a MU-MIMO function through a differential RB. Hereinafter, in the following specification, an example of an operation of the DU 210 and the RU 220 for receiving an uplink signal when at least one function related to the ULPI is performed in the RU 220 will be described. First, an operation of the DU 210 and the RU 220 for the ULPI will be described later in FIGS. 7A and 7B.

FIG. 7A illustrates an example of an operation of an RU and a DU in Class A.

FIG. 7A illustrates an example 700 of a method in which an RU 220 processes a demodulation reference signal (DMRS) and provides processed information to a DU 210 in Class A. For example, the Class A may indicate an example of a function split in which the DMRS processing is performed in the RU 220. The Class A may be referred to as uplink performance improvement (ULPI) class A or DMRS beamforming-equalizing (DMRS BF-EQ). For example, the DMRS processing may include extraction, channel estimation, and weight calculation for an uplink DMRS.

Referring to the example 700, when using the Class A, the RU 220 may perform fast Fourier transform (FFT) 720, sounding reference signal (SRS) extraction 721, SRS channel estimation 722, SRS beamforming weight (BFW) calculation 723, DMRS extraction 724, DMRS channel estimation 725, DMRS weight calculation 726, beamforming 727, equalizing 728, and channel information-based BFW calculation 729. In the example 700, although it is illustrated as an operation (or a function), such as the FFT 720, the SRS extraction 721, the SRS channel estimation 722, the SRS BFW calculation 723, the DMRS extraction 724, the DMRS channel estimation 725, the DMRS weight calculation 726, the beamforming 727, the equalizing 728, and the channel information-based BFW calculation 729, the RU 220 may be implemented based on hardware, software, or a combination of hardware and software for performing the operation.

Referring to the example 700, the RU 220 may perform the FFT 720 on an uplink signal received through an uplink channel. For example, the RU 220 may perform the FFT 720 on the uplink signal received from a user equipment 120. The RU 220 may obtain a signal yrx associated with antenna elements based on the FFT 720. For example, the uplink channel may include a physical uplink shared channel (PUSCH). For example, the uplink signal may include an SRS or a DMRS.

For example, the RU 220 may perform the SRS extraction 721 on the signal yrx. For example, the RU 220 may perform the SRS channel estimation 722 on an SRS ySRS extracted through the SRS extraction 721. The RU 220 may obtain a channel estimation matrix HSRS based on the SRS channel estimation 722. The RU 220 may perform the SRS BFW calculation 723 based on the channel estimation matrix HSRS. The RU 220 may obtain a matrix WSRS (NxK) indicating concatenation of beamforming weight vectors (e.g., N) based on the SRS BFW calculation 723. The K may indicate the number of antenna elements of the RU 220.

For example, the RU 220 may perform the DMRS extraction 724 based on the signal yᵣₓ and the matrix W_{SRS}. For example, the RU 220 may obtain a DMRS y`_{dmrs} extracted based on the DMRS extraction 724. While performing the DMRS extraction 724, the RU 220 may also perform dimension reduction. For example, the dimension reduction may be referred to as port reduction, transpose reduction, or transpose dimension reduction. Based on the dimension reduction, an order (or a value) (e.g., the K) of a dimension corresponding to the antenna elements of the RU 220 may decrease. For example, the RU 220 may perform the DMRS channel estimation 725 based on the extracted DMRS y`_{dmrs}. The RU 220 may obtain a channel estimation matrix H_{dmrs} based on the DMRS channel estimation 725. The RU 220 may perform the DMRS weight calculation 726 based on the channel estimation matrix H_{dmrs}. The RU 220 may obtain, based on the DMRS weight calculation 726, a matrix W`_{dmrs} (LxK) indicating concatenation of beamforming weight vectors (L) and a matrix W`_{eq} (LxL) indicating a normalization weight matrix of IQ data in each layer.

For example, the RU 220 may perform the beamforming 727. For example, the RU 220 may perform the beamforming 727 on the signal yᵣₓ based on the matrix W_{SRS} and the matrix W`_{dmrs} (LxK). The RU 220 may obtain a signal y_{bf} beamformed based on the beamforming 727. At this tim, the matrix W_{SRS} may be obtained based on the SRS BFW calculation 723, SRS BFW calculation 714, or the channel information-based BFW calculation 729. For example, the channel information-based BFW calculation 729 may be performed by the RU 220. For example, the SRS BFW calculation 714 may be performed by the DU 210. For example, the RU 220 may perform the equalizing 728 on the signal y_{bf} based on the matrix W`_{eq}. The RU 220 may obtain a signal y_{eq} based on the equalizing 728. For example, the RU 22 may provide (or transmit) the signal y_{eq} to the DU 210. The signal y_{eq} may be referred to as an uplink message. For example, the uplink message may include information on a calculated SINR (SINR_{yeq}).

Referring to the example 700, when using the Class A, the DU 210 may perform layer demapping 711, demodulation and decoding 712, SRS channel estimation 713, and the SRS BFW calculation 714. In the example 700, although it is illustrated as an operation (or a function), such as the layer demapping 711, the demodulation and decoding 712, the SRS channel estimation 713, and the SRS BFW calculation 714, the DU 210 may be implemented based on hardware, software, or a combination of hardware and software for performing the operation.

Referring to the example 700, the DU 210 may perform the layer demapping 711 based on the signal y_{eq} received (or obtained) from the RU 220. The DU 210 may perform the demodulation and decoding 712 based on a result of the layer demapping 711 and the SINR (SINR_{yeq}). In addition, the DU 210 may perform the SRS channel estimation 713 based on the extracted SRS y_{SRS}. The DU 210 may obtain the channel estimation matrix H_{SRS} based on the SRS channel estimation 713. Thereafter, the DU 210 may perform scheduling through a scheduler.

FIG. 7B illustrates an example of an operation of an RU and a DU in Class B.

FIG. 7B illustrates an example 750 of a method for providing information in which DMRS processing is performed in an RU 220 and a DU 210 in Class B. For example, the Class B may indicate an example of a function split in which the DMRS processing is performed in the RU 220 and the DU 210. The Class B may be referred to as uplink performance improvement (ULPI) class B or DMRS beamforming-nonequalizing (DMRS BF-NEQ). For example, the DMRS processing may include extraction, channel estimation, and weight calculation for an uplink DMRS.

Referring to the example 750, when using the Class B, the RU 220 may perform fast Fourier transform (FFT) 770, sounding reference signal (SRS) extraction 771, SRS channel estimation 772, SRS beamforming weight (BFW) calculation 773, DMRS extraction 774, DMRS channel estimation 775, DMRS weight calculation 776, beamforming 777, and channel information-based BFW calculation 778. In the example 700, although it is illustrated as an operation (or a function), such as the FFT 770, the SRS extraction 771, the SRS channel estimation 772, the SRS BFW calculation 773, the DMRS extraction 774, the DMRS channel estimation 775, the DMRS weight calculation 776, the beamforming 777, and the channel information-based BFW calculation 778, the RU 220 may be implemented based on hardware, software, or a combination of hardware and software for performing the operation.

Referring to the example 750, the RU 220 may perform the FFT 770 on an uplink signal received through an uplink channel. For example, the RU 220 may perform the FFT 770 on the uplink signal received from a user equipment 120. The RU 220 may obtain a signal yᵣₓ associated with antenna elements based on the FFT 770. For example, the uplink channel may include a physical uplink shared channel (PUSCH). For example, the uplink signal may include an SRS or a DMRS.

For example, the RU 220 may perform the SRS extraction 771 on the signal yᵣₓ. For example, the RU 220 may perform the SRS channel estimation 772 on an SRS y_{SRS} extracted through the SRS extraction 771. The RU 220 may obtain a channel estimation matrix H_{SRS} based on the SRS channel estimation 772. The RU 220 may perform the SRS BFW calculation 773 based on the channel estimation matrix H_{SRS}. The RU 220 may obtain, based on the SRS BFW calculation 773, a matrix W_{SRS} (NxK) indicating concatenation of beamforming weight vectors (e.g., N). The K may indicate the number of antenna elements of the RU 220.

For example, the RU 220 may perform the DMRS extraction 774 based on the signal yᵣₓ and the matrix W_{SRS}. For example, the RU 220 may obtain a DMRS y`_{dmrs} extracted based on the DMRS extraction 774. While performing the DMRS extraction 774, the RU 220 may also perform dimension reduction. For example, the dimension reduction may be referred to as port reduction, transpose reduction, or transpose dimension reduction. Based on the dimension reduction, an order (or a value) (e.g., the K) of a dimension corresponding to the antenna elements of the RU 220 may decrease. For example, the RU 220 may perform the DMRS channel estimation 775 based on the extracted DMRS y`_{dmrs}. The RU 220 may obtain a channel estimation matrix H_{dmrs} based on the DMRS channel estimation 775. The RU 220 may perform the DMRS weight calculation 776 based on the channel estimation matrix H_{dmrs}. The RU 220 may obtain, based on the DMRS weight calculation 776, a matrix W`_{dmrs} (LxK) indicating concatenation of beamforming weight vectors (L).

For example, the RU 220 may perform the beamforming 777. For example, the RU 220 may perform the beamforming 777 on the signal yᵣₓ based on the matrix W_{SRS} and the matrix W`_{dmrs} (LxK). The RU 220 may obtain a signal y_{bf} beamformed based on the beamforming 777. At this tim, the matrix W_{SRS} may be obtained based on the SRS BFW calculation 773, SRS BFW calculation 769, or the channel information-based BFW calculation 779. For example, the channel information-based BFW calculation 779 may be performed by the RU 220. For example, the SRS BFW calculation 769 may be performed by the DU 210. For example, the RU 220 may provide (or transmit) the signal y_{bf} to the DU 210. The signal y_{bf} may be referred to as an uplink message. For example, the uplink message may include information on a calculated SINR (SINR_{yeq}).

Referring to the example 750, when using the Class B, the DU 210 may perform DMRS extraction 761, DMRS channel estimation 762, DMRS weight calculation 763, combining 764, equalizing 765, layer demapping 766, demodulation and decoding 767, SRS channel estimation 768, and the SRS BFW calculation 769. In the example 750, although it is illustrated as an operation (or a function), such as the DMRS extraction 761, the DMRS channel estimation 762, the DMRS weight calculation 763, the combining 764, the equalizing 765, the layer demapping 766, the demodulation and decoding 767, the SRS channel estimation 768, and the SRS BFW calculation 769, the DU 210 may be implemented based on hardware, software, or a combination of hardware and software for performing the operation.

For example, the DU 210 may perform the DMRS extraction 761 based on the signal y_{bf}. For example, the DU 210 may obtain a DMRS y_{dmrs} extracted based on the DMRS extraction 761. For example, the DU 210 may perform the DMRS channel estimation 762 based on the extracted DMRS y_{dmrs}. The DU 210 may obtain the channel estimation matrix H_{dmrs} based on the DMRS channel estimation 762. The DU 210 may perform the DMRS weight calculation 763 based on the channel estimation matrix H_{dmrs}. The DU 210 may obtain, based on the DMRS weight calculation 763, a matrix W_{eq} (LxL) indicating a normalization weight matrix of IQ data and a matrix W`_{comb} (Lx(M+N)) in which spatial streams (M+N) are mapped to layers (L). For example, the DU 210 may perform the combining 764 on the signal y_{bf} based on the matrix W`_{comb}. The DU 210 may obtain a signal of unequalized layer streams (M) based on the combining 764. For example, the DU 210 may perform the equalizing 765 on a signal y_{comb} based on the matrix W_{eq}. The DU 210 may obtain a signal y_{eq} and the SINR (SINR_{yeq}) based on the equalizing 765. For example, the DU 210 may perform the layer demapping 766 based on the signal y_{eq}. The DU 210 may perform the demodulation and decoding 767 based on a result of the layer demapping 766 and the SINR (SINR_{yeq}). In addition, the DU 210 may perform the SRS channel estimation 768 based on the extracted SRS y_{SRS}. The DU 210 may obtain the channel estimation matrix H_{SRS} based on the SRS channel estimation 768. Thereafter, the DU 210 may perform scheduling through a scheduler.

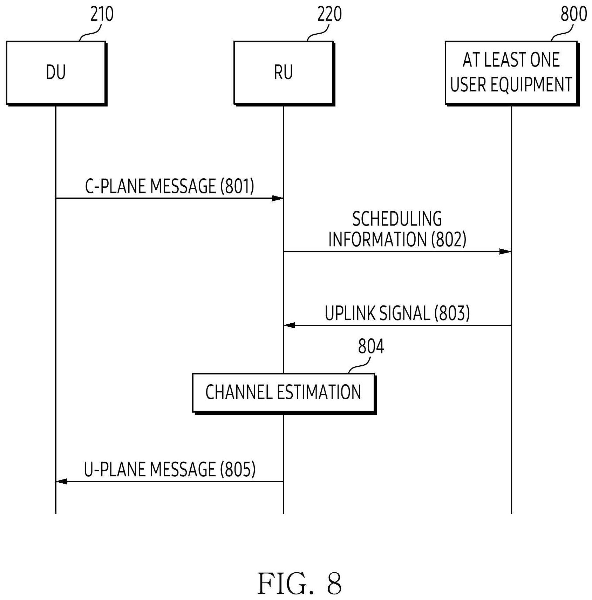

FIG. 8 illustrates an example of an operation of a DU and an RU for receiving an uplink signal.

Referring to FIG. 8, a DU 210 and an RU 220 may be configured through the Class A and/or the Class B illustrated in FIGS. 7A and 7B. For example, the RU 220 configured through the Class A and/or the Class B may perform channel estimation for an uplink. The DU 210 and the RU 220 configured through the Class A and/or the Class B may receive an uplink signal through operation 801 to operation 805.

In operation 801, the DU 210 may transmit a C-plane message to the RU 220. The RU 220 may receive the C-plane message from the DU 210.

According to an embodiment, the DU 210 may generate the C-plane message. The C-plane message may include section information (e.g., the section information 530 of FIG. 5) for indicating a resource area and section extension information (e.g., the section extension information 540 of FIGS. 5, 6A, and 6B). For example, the C-plane message may indicate a resource allocation area for each port among multiple ports for a group configuration in the resource area. As an example, at least one of the section information and the section extension information may indicate the resource allocation area for each port among the multiple ports for the group configuration in the resource area. As an example, the section information may indicate the resource allocation area for each port among the multiple ports for the group configuration in the resource area. As an example, the section extension information may indicate the resource allocation area for each port among the multiple ports for the group configuration in the resource area.

The section information may include information on the number of a plurality of resource blocks (e.g., a physical resource block (PRB)) configuring the resource area (e.g., 'numPrbc') and information for indicating a start resource block of the plurality of resource blocks (e.g., 'startPrbc').

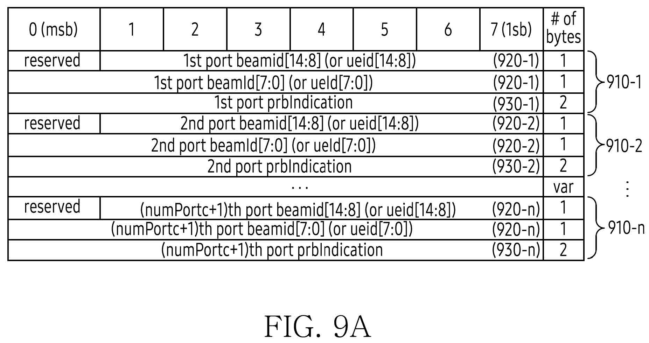

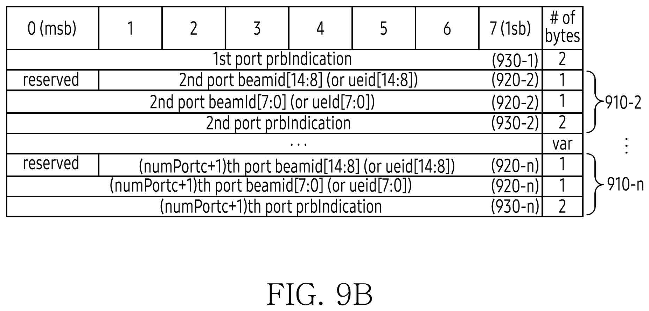

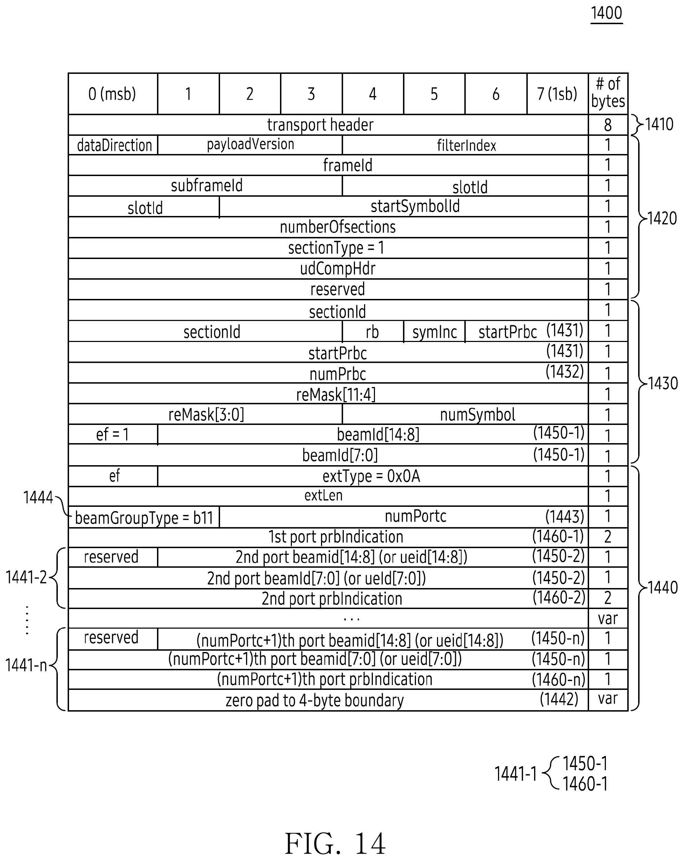

According to an embodiment, the C-plane message may include information for indicating at least one resource block configuring a resource allocation area for one port among the plurality of resource blocks. For example, the information for indicating the at least one resource block may include an indicator configured based on the number of the at least one resource block and a start resource block of the at least one resource block. A specific example of the indicator configured based on the number of the at least one resource block and the start resource block of the at least one resource block will be described later in FIGS. 9A, 9B, and/or 14.

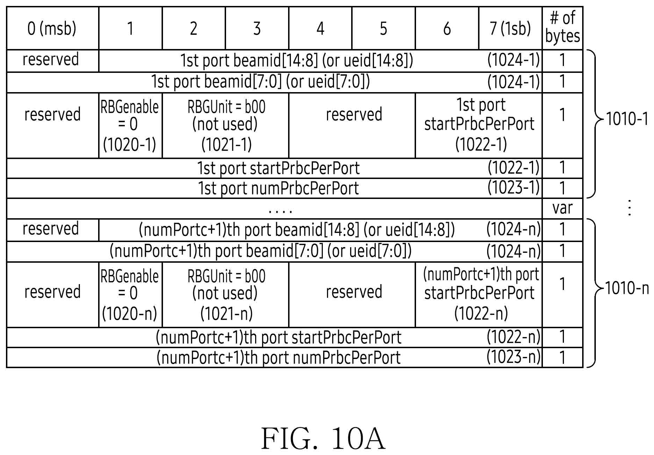

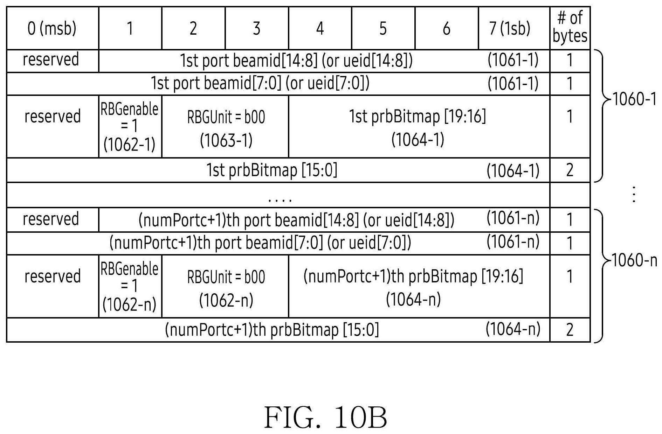

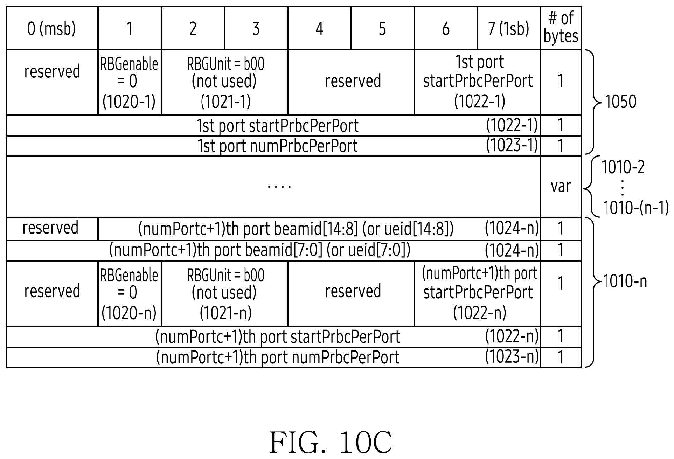

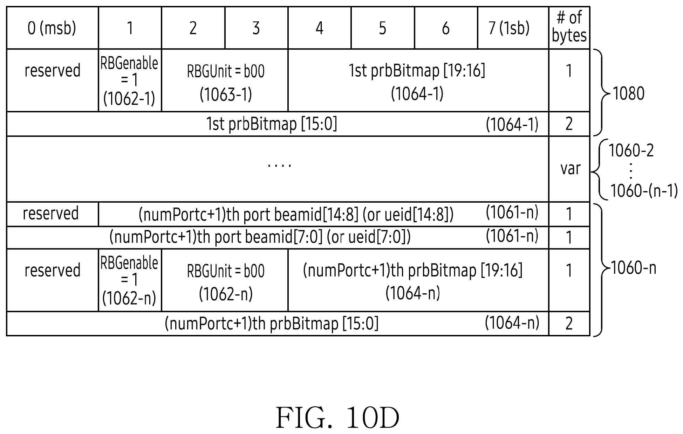

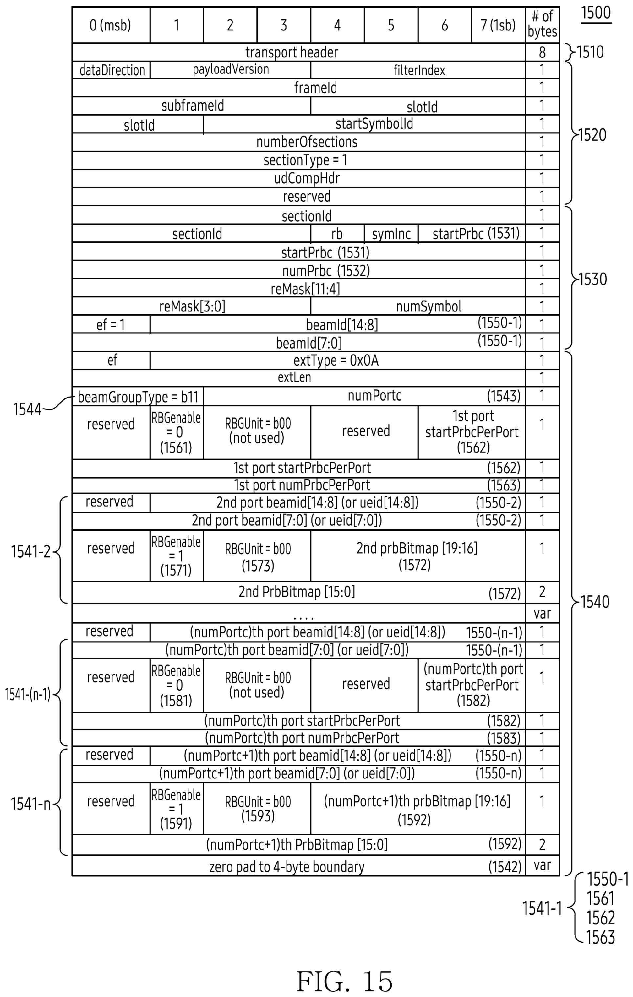

According to an embodiment, the C-plane message may include information for indicating the at least one resource block configuring the resource allocation area for one port among the plurality of resource blocks. The information for indicating the at least one resource block may include the information on the number of the at least one resource block and the information on the start resource block of the at least one resource block. The C-plane message may further include information for indicating at least one resource group configuring a resource allocation area for one port among a plurality of resource groups configured based on the plurality of resource blocks. A specific example of the information on the number of the at least one resource block, the information on the start resource block of the at least one resource block, and/or the information for indicating the at least one resource group will be described later in FIGS. 10A, 10B, 10C, 10D, and/or 15.

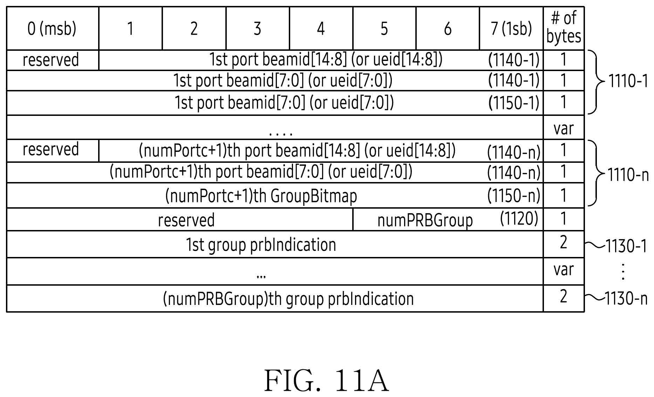

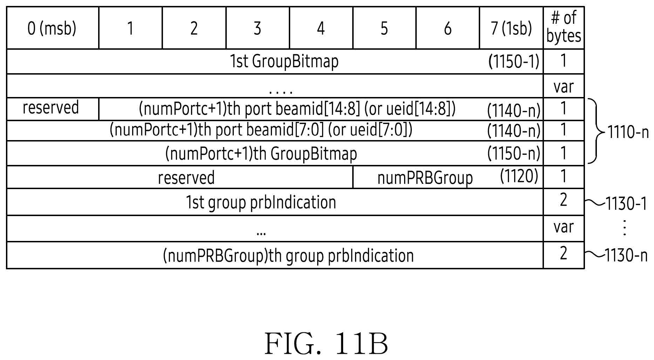

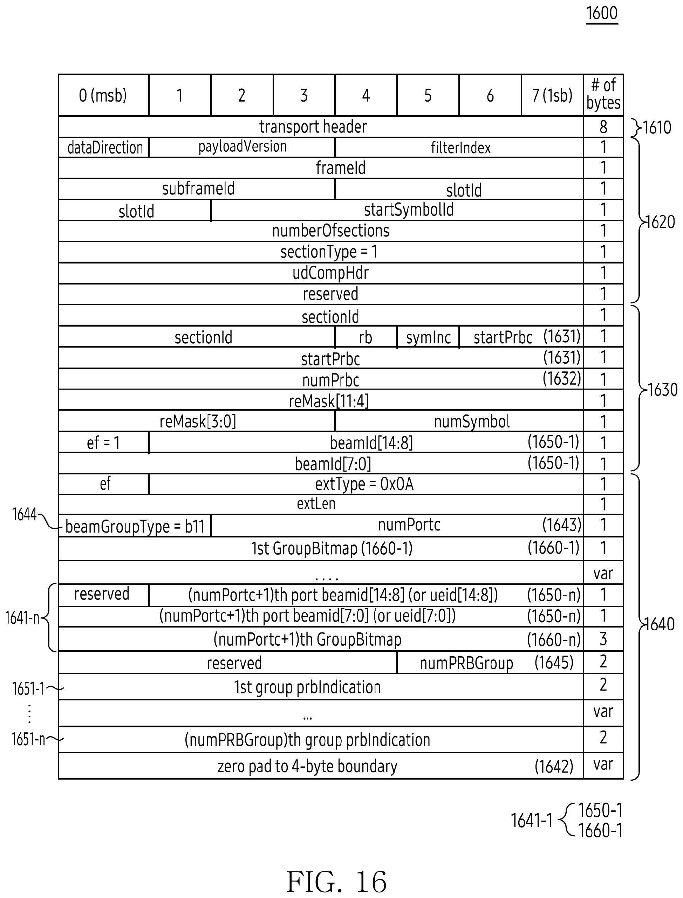

According to an embodiment, the C-plane message may include the information for indicating the at least one resource group configuring the resource allocation area for one port among the plurality of resource groups configured based on the plurality of resource blocks and information for indicating resource blocks for each of the plurality of resource groups. A specific example of the information for indicating the at least one resource group configuring the resource allocation area for one port and the information for indicating the resource blocks for each of the plurality of resource groups will be described later in FIGS. 11A, 11B, and/or 16.

In operation 802, the RU 220 may transmit scheduling information to at least one user equipment 800. For example, the scheduling information may be transmitted to the at least one user equipment 800 through downlink control information (DCI). The at least one user equipment 800 may identify, based on the scheduling information, a resource allocation area for an uplink signal.

In operation 803, the at least one user equipment 800 may transmit uplink signal(s) to the RU 220. For example, each of the at least one user equipment 800 may transmit the uplink signal(s) to the RU 220 based on the resource allocation area identified based on the scheduling information. The RU 220 may receive the uplink signal(s) from each of the at least one user equipment 800. For example, each of the uplink signal(s) may include a demodulation-reference signal (DMRS). The DMRS may be used for channel estimation.

In operation 804, the RU 220 may perform channel estimation based on an uplink signal received from the at least one user equipment 800 through an uplink channel, according to the operation 802.

According to an embodiment, the RU 220 may identify, based on the C-plane message, a resource allocation area allocated to each of the at least one user equipment 800 (or multiple ports). For example, a resource area may be allocated to the at least one user equipment 800 (or the multiple ports). Among the resource area, a resource allocation area may be allocated for one user equipment among the at least one user equipment 800 (or the multiple ports). The RU 220 may perform channel estimation on the resource allocation area. The RU 220 may perform channel estimation on at least one resource allocation area included in the resource area.

In operation 805, the RU 220 may transmit a U-plane message to the DU 210. The U-plane message may include information on the uplink signal received in the operation 803.

As described above, in order for the RU 220 to perform channel estimation on the uplink channel for the at least one user equipment 800, the RU 220 should receive, from the DU 210, information on the resource allocation area for each of the at least one user equipment 800 (or endpoints). Therefore, in the following specification, a specific example in which the information on the resource allocation area for each of the at least one user equipment 800 (or endpoints) is included in the C-plane message will be described.

FIG. 9A illustrates an example of information for indicating a resource allocation area for each of multiple ports.

Referring to FIG. 9A, a C-plane message may include section information for indicating a resource area and section extension information. For example, the section information may include information for indicating the number of a plurality of resource blocks configuring the resource area (e.g., the 'numPrbc' of FIG. 5) and information for indicating a start resource block of the plurality of resource blocks (e.g., the 'startPrbc' of FIG. 5).

According to an embodiment, the C-plane message may include information for indicating at least one resource block configuring a resource allocation area for one port among a plurality of resource blocks.

For example, the C-plane message may include information on n ports. Although not illustrated, the C-plane message may include the 'numPortc'. The 'numPortc' may mean the number of ports added to one port. As an example, when a value of the 'numPortc' is 1, the C-plane message may include information on 2 ports. As an example, when the value of the 'numPortc' is 3, the C-plane message may include information on 4 ports.

For example, the C-plane message may include information 910-1 on a first port to information 910-n on an n-th port. Each of the information 910-1 on the first port to the information 910-n on the n-th port may include a beam identifier ('beamid') (or a user equipment identifier ('ueid')) allocated to a corresponding port and/or an indicator ('prbIndication') for indicating at least one resource block. The indicator ('prbIndication') for indicating the at least one resource block may be configured based on the number of the at least one resource block and a start resource block of the at least one resource block.

As an example, the information 910-1 on the first port may include a beam identifier 920-1 ('1^{st} port beamid') allocated to the first port. The information 910-1 on the first port may include an indicator 930-1 ('1^{st} port prbIndication') for indicating at least one resource block for the first port. The indicator 930-1 may be configured based on the number of the at least one resource block for the first port and a start resource block of the at least one resource block.

As an example, the information 910-n on the n-th port may include a beam identifier 920-n ('(numPortc+1)^{th} port beamid') allocated to the n-th port. The information 910-n on the n-th port may include an indicator 930-n ('(numPortc+1)^{th} port prbIndication') for indicating at least one resource block for the n-th port. The indicator 930-n may be configured based on the number of the at least one resource block for the n-th port and a start resource block of the at least one resource block.

For example, the beam identifiers 920-1 to 920-n (or user equipment identifiers) respectively included in the information 910-1 on the first port to the information 910-n on the n-th port may be configured with 15 bits. The indicators 930-1 to 930-n respectively included in the information 910-1 on the first port to the information 910-n on the n-th port may be configured with 8 bits.

According to an embodiment, at least a portion of the information 910-1 on the first port to the information 910-n on the n-th port may be included in the section information. A remaining portion of the information 910-1 on the first port to the information 910-n on the n-th port may be included in the section extension information.

For example, the beam identifier 920-1 allocated to the first port may be included in the section information. Remaining information excluding the beam identifier 920-1 allocated to the first port among the information 910-1 on the first port to the information 910-n on the n-th port may be included in section extension information. An example in which the remaining information excluding the beam identifier 920-1 allocated to the first port among the information 910-1 on the first port to the information 910-n on the n-th port is included in the section extension information will be described later in FIG. 9B.

For example, the information 910-1 on the first port may be included in the section information. Information 910-2 on a second port to the information 910-n on the n-th port may be included in the section extension information.

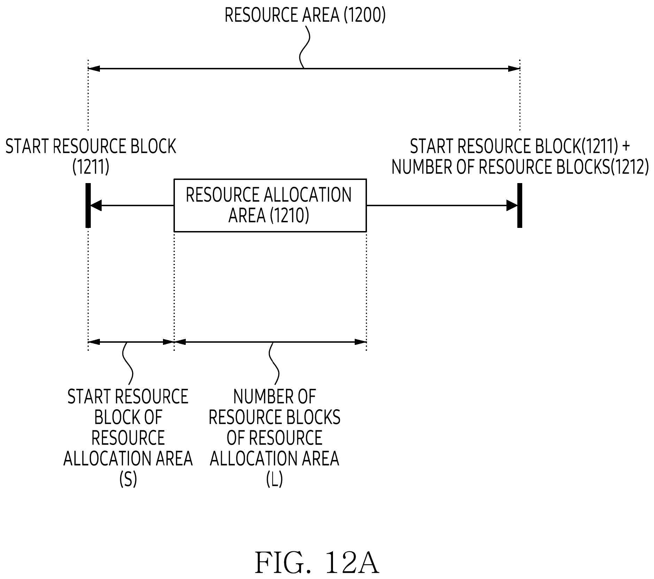

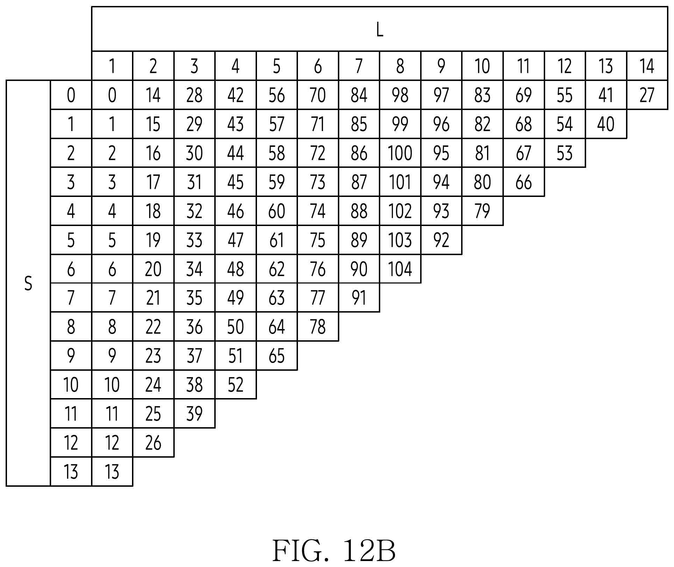

A specific example of an indicator (e.g., the indicator 930-1 to the indicator 930-n) configured based on the number of at least one resource block and a start resource block of the at least one resource block will be described later in FIGS. 12A and 12B.

According to an embodiment, in FIG. 9A, although the information 910-1 on the first port to the information 910-n on the n-th port is illustrated as being continuously configured, this is for convenience of description and is not limited thereto. The information 910-1 on the first port to the information 910-n on the n-th port may be included in various forms (e.g., discontinuous forms) in the C-plane message. According to an embodiment, at least a portion or all of the information 910-1 on the first port to the information 910-n on the n-th port may be included in the C-plane message explicitly or implicitly.

FIG. 9B illustrates an example of section extension information for indicating a resource allocation area for each of multiple ports.

Referring to FIG. 9B, the section extension information may include at least a portion of the information illustrated in FIG. 9A. For example, the section extension information may include a portion of information on a first port. The section extension information may include information 910-2 on a second port to information 910-n on an n-th port.

For example, the section extension information may include an indicator 930-1 ('1^{st} port prbIndication') for indicating at least one resource block for the first port among the information 910-1 on the first port of FIG. 9A. The section extension information may include all of the information 910-2 on the second port to the information 910-n on the n-th port of FIG. 9A.

The section extension information may not include a beam identifier 920-1 ('1^{st} port beamid') allocated to the first port among the information 910-1 on the first port of FIG. 9A. The beam identifier 920-1 ('1^{st} port beamid') allocated to the first port may be included in section information (e.g., the section information 530 of FIG. 5). Since the section extension information is indicated after the section information, the section extension information may not include the beam identifier 920-1 ('1^{st} port beamid') allocated to the first port among the information 910-1 on the first port.

According to an embodiment, the section extension information illustrated in FIG. 9B may be configured based on a section extension type 10. An example of a C-plane message including the section extension information configured based on the section extension type 10 will be described later in FIG. 14.

FIG. 10A illustrates an example of information for indicating a resource allocation area for each of multiple ports.

FIG. 10B illustrates an example of information for indicating a resource allocation area for each of multiple ports.

Referring to FIGS. 10A and 10B, a C-plane message may include section information for indicating a resource area and section extension information. For example, the section information may include information for indicating the number of a plurality of resource blocks configuring the resource area (e.g., the 'numPrbc' of FIG. 5) and information for indicating a start resource block of the plurality of resource blocks (e.g., the 'startPrbc' of FIG. 5).

According to an embodiment, the C-plane message may include information for indicating at least one resource block configuring a resource allocation area for one port among the plurality of resource blocks. The information for indicating the at least one resource block may include information on the number of the at least one resource block and information on a start resource block of the at least one resource block. The C-plane message may further include information for indicating at least one resource group configuring a resource allocation area for one port among a plurality of resource groups configured based on the plurality of resource blocks.

For example, the C-plane message may include information on n ports. Although not illustrated, the C-plane message may include the 'numPortc'. The 'numPortc' may mean the number of ports added to one port. As an example, when a value of the 'numPortc' is 1, the C-plane message may include information on 2 ports. As an example, when the value of the 'numPortc' is 3, the C-plane message may include information on 4 ports.

According to an embodiment, the information on the n ports included in the C-plane message may include 'RBGenable' indicating whether a resource allocation area is indicated based on the plurality of resource groups. When the 'RBGenable' is set to a first value (e.g., '0'), the resource allocation area may not be indicated based on the plurality of resource groups. When the 'RBGenable' is set to a second value (e.g., '1'), the resource allocation area may be indicated based on the plurality of resource groups.

For example, when the resource allocation area is continuous, a value of the 'RBGenable' may be set to the first value (e.g., '0'). When the resource allocation area is discontinuous, the value of the 'RBGenable' may be set to the second value (e.g., '1').

Referring to FIG. 10A, an example of information included in the C-plane message when a value of information 1020-1, . . . 1020-n ('RBGenable') for indicating whether the resource allocation area is indicated based on the plurality of resource groups is the first value (e.g., '0') is illustrated. In FIG. 10A, for convenience of description, an example in which the value of the information 1020-1, . . . 1020-n ('RBGenable') for indicating whether the resource allocation area is indicated based on the plurality of resource groups is set to the first value in all of a first port to an n-th port is illustrated, but is not limited thereto. Only in at least one port among the first port to the n-th port, the resource allocation area may not be indicated based on the plurality of resource groups.

Referring to FIG. 10B, an example of information included in the C-plane message when a value of information 1062-1, . . . 1062-n ('RBGenable') for indicating whether the resource allocation area is indicated based on the plurality of resource groups is the second value (e.g., '1') is illustrated. In FIG. 10B, for convenience of description, an example in which the value of the information 1062-1, . . . 1062-n ('RBGenable') for indicating whether the resource allocation area is indicated based on the plurality of resource groups is set to the second value in all of a first port to an n-th port is illustrated, but is not limited thereto. Only in at least one port among the first port to the n-th port, the resource allocation area may be indicated based on the plurality of resource groups.

First, referring to FIG. 10A, for example, the C-plane message may include information 1010-1 on the first port to information 1010-n on the n-th port. Each of the information 1010-1 on the first port to the information 1010-n on the n-th port may include a beam identifier ('beamid') (or a user equipment identifier ('ueid')) allocated to a corresponding port, information for indicating the number of at least one resource block allocated to the corresponding port, and/or information for indicating a start resource block of the at least one resource block allocated to the corresponding port.

As an example, the information 1010-1 on the first port may include information 1020-1 ('RBGenable') for indicating whether the resource allocation area is indicated based on the plurality of resource groups, information 1021-1 ('RBGUnit') for indicating a unit of the plurality of resource groups, information 1022-1 ('1^{st} port startPrbcPerPort') for indicating a start resource block of at least one resource block allocated to the first port, information 1023-1 ('1^{st} port numPrbcPerPort') for indicating the number of the at least one resource block allocated to the first port, and/or a beam identifier 1024-1 ('1^{st} port beamid') (or a user equipment identifier) allocated to the first port.

As an example, the information 1010-n on the n-th port may include information 1020-n ('RBGenable') for indicating whether the resource allocation area is indicated based on the plurality of resource groups, information 1021-n ('RBGUnit') for indicating a unit of the plurality of resource groups, information 1022-n ('(numPortc+1)^{th} port startPrbcPerPort') for indicating a start resource block of at least one resource block allocated to the n-th port, information 1023-n ('(numPortc+1) ^{th} port numPrbcPerPort') for indicating the number of the at least one resource block allocated to the n-th port, and/or a beam identifier 1024-n ('(numPortc+1) ^{th} port beamid') (or a user equipment identifier) allocated to the n-th port.

The information 1021-1 to 1021-n ('RBGUnit') for indicating a unit of the plurality of resource groups may not be used. According to an embodiment, the information 1021-1 to 1021-n ('RBGUnit') for indicating the unit of the plurality of resource groups may not be included in the information 1010-1 to 1010-n on multiple ports.

For example, the information 1022-1 to 1022-n ('startPrbcPerPort') for indicating a start resource block of at least one resource block allocated to one port may be configured with 10 bits. The information 1023-1 to 1023-n for indicating the number of the at least one resource block allocated to one port may be configured with 8 bits. The beam identifiers 1024-1 to 1024-n allocated to one port may be configured with 15 bits.

According to an embodiment, at least a portion of the information 1010-1 on the first port to the information 1010-n on the n-th port may be included in the section information. A remaining portion of the information 1010-1 on the first port to the information 1010-n on the n-th port may be included in the section extension information.

For example, the beam identifier 1024-1 allocated to the first port may be included in the section information. Remaining information excluding the beam identifier 1024-1 allocated to the first port among the information 1010-1 on the first port to the information 1010-n on the n-th port may be included in the section extension information. An example in which the remaining information excluding the beam identifier 1024-1 allocated to the first port among the information 1010-1 on the first port to the information 1010-n on the n-th port is included in the section extension information will be described later in FIG. 10C.

For example, the information 1010-1 on the first port may be included in the section information. Information 1010-2 on a second port to the information 1010-n on the n-th port may be included in the section extension information.

Referring to FIG. 10B, for example, the C-plane message may include information 1060-1 on the first port to information 1060-n on the n-th port. Each of the information 1060-1 on the first port to the information 1060-n on the n-th port may include a beam identifier ('beamid') (or a user equipment identifier ('ueid')) allocated to a corresponding port and information for indicating at least one resource group allocated to the corresponding port among the plurality of resource groups.

As an example, the information 1060-1 on the first port may include a beam identifier 1061-1 ('1^{st} port beamid') (or a user equipment identifier) allocated to the first port, information 1062-1 ('RBGenable') for indicating whether the resource allocation area is indicated based on the plurality of resource groups, information 1063-1 ('RBGUnit') for indicating a unit of the plurality of resource groups, and/or information 1064-1 ('1^{st} prbBitmap') for indicating at least one resource group allocated to the first port.

As an example, the information 1060-n on the n-th port may include a beam identifier 1061-n ('(numPortc+1)^{th} port beamid') (or a user equipment identifier) allocated to the n-th port, information 1062-n ('RBGenable') for indicating whether the resource allocation area is indicated based on the plurality of resource groups, information 1063-n (RBGUnit) for indicating a unit of the plurality of resource groups, and/or information 1064-n ('(numPortc+1)^{th} prbBitmap') for indicating at least one resource group allocated to the n-th port.

For example, the information 1063-1 to 1063-n ('RBGUnit') for indicating a unit of the plurality of resource groups may indicate at least one of 2, 4, 8, and 16. The information 1064-1 to 1064-n for indicating the at least one resource group allocated to one port may indicate, based on a bitmap, the at least one resource group among the plurality of resource groups configured according to the information 1063-1 to 1063-n for indicating the unit of the plurality of resource groups.

As an example, when the information 1063-1 to 1063-n for indicating the unit of the plurality of resource groups indicates 4, the plurality of resource groups may be configured in units of 4 RB based on a start resource block (the 'startPrbc' of FIG. 5) of a plurality of resource blocks. When the information 1064-1 to 1064-n for indicating the at least one resource group allocated to one port is set to '0101', the information 1064-1 to 1064-n for indicating the at least one resource group allocated to one port may indicate 2 areas of [startPrbc, startPrbc+4] and [startPrbC+8, startPrbC+12].

For example, the beam identifiers 1061-1 to 1061-n allocated to one port may be configured with 15 bits. The information 1063-1 to 1063-n for indicating the unit of the plurality of resource groups may be configured with 2 bits. The information 1064-1 to 1064-n for indicating the at least one resource group allocated to one port may be configured with 20 bits.

According to an embodiment, at least a portion of the information 1060-1 on the first port to the information 1060-n on the n-th port may be included in the section information. A remaining portion of the information 1060-1 on the first port to the information 1060-n on the n-th port may be included in the section extension information.

For example, the beam identifier 1061-1 allocated to the first port may be included in the section information. Remaining information excluding the beam identifier 1061-1 allocated to the first port among the information 1060-1 on the first port to the information 1060-n on the n-th port may be included in the section extension information. An example in which the remaining information excluding the beam identifier 1061-1 allocated to the first port among the information 1060-1 on the first port to the information 1060-n on the n-th port is included in the section extension information will be described later in FIG. 10D.

For example, the information 1060-1 on the first port may be included in the section information. Information 1060-2 on a second port to the information 1060-n on the n-th port may be included in the section extension information.

In FIGS. 10A and 10B, although a case that the value of the 'RBGenable' is the first value and a case that the value of the 'RBGenable' is the second value are respectively illustrated, it is not limited thereto. Whether the resource allocation area is indicated based on the plurality of resource groups may be independently set for each of multiple ports. For example, the resource allocation area may not be indicated based on the plurality of resource groups in the first port, and the resource allocation area may be indicated based on the plurality of resource groups in the n-th port. In this case, the C-plane message may include the information 1010-1 on the first port of FIG. 10A and the information 1060-n on the n-th port of FIG. 10B.

According to an embodiment, the beam identifiers 1024-1 and 1061-1 (or user equipment identifiers) allocated to the first port among the information 1010-1 and 1060-1 on the first port may be included in the section information. Remaining information excluding the beam identifiers 1024-1 and 1061-1 (or user equipment identifiers) allocated to the first port may be included in the section extension information.

FIG. 10C illustrates an example of section extension information for indicating a resource allocation area for each of multiple ports.

FIG. 10D illustrates an example of section extension information for indicating a resource allocation area for each of multiple ports.

Referring to FIG. 10C, section extension information may include at least a portion of the information illustrated in FIG. 10A. For example, the section extension information may include a portion 1050 of the information 1010-1 on the first port of FIG. 10A. The section extension information may include the information 1010-2 on the second port to the information 1010-n on the n-th port.

For example, the section extension information may include, among the information 1010-1 on the first port of FIG. 10A, the information 1020-1 ('RBGenable') for indicating whether the resource allocation area is indicated based on the plurality of resource groups, the information 1021-1 (RBGUnit) for indicating the unit of the plurality of resource groups, the information 1022-1 ('1^{st} port startPrbcPerPort') for indicating the start resource block of the at least one resource block allocated to the first port, and/or the information 1023-1 ('1^{st} port numPrbcPerPort') for indicating the number of the at least one resource block allocated to the first port. The section extension information may include all of the information 1010-2 on the second port to the information 1010-n on the n-th port of FIG. 10A.

The section extension information may not include the beam identifier 1024-1 ('1^{st} port beamid') allocated to the first port among the information 1010-1 on the first port of FIG. 10A. The beam identifier 1024-1 ('1^{st} port beamid') allocated to the first port may be included in section information (e.g., the section information 530 of FIG. 5). Since the section extension information is indicated after the section information, the section extension information may not include the beam identifier 1024-1 ('1^{st} port beamid') allocated to the first port among the information 1010-1 on the first port.

Referring to FIG. 10D, section extension information may include at least a portion of the information illustrated in FIG. 10B. For example, the section extension information may include a portion 1080 of the information 1060-1 on the first port of FIG. 10B. The section extension information may include the information 1060-2 on the second port to the information 1060-n on the n-th port.

For example, the section extension information may include, among the information 1060-1 on the first port of FIG. 10B, the information 1062-1 ('RBGenable') for indicating whether the resource allocation area is indicated based on the plurality of resource groups, the information 1063-1 (RBGUnit) for indicating the unit of the plurality of resource groups, and/or the information 1064-1 ('1^{st} prbBitmap') for indicating the at least one resource group allocated to the first port. The section extension information may include all of the information 1060-2 on the second port to the information 1060-n on the n-th port of FIG. 10B.

The section extension information may not include the beam identifier 1061-1 ('1^{st} port beamid') allocated to the first port among the information 1060-1 on the first port of FIG. 10B. The beam identifier 1061-1 ('1^{st} port beamid') allocated to the first port may be included in section information (e.g., the section information 530 of FIG. 5). Since the section extension information is indicated after the section information, the section extension information may not include the beam identifier 1061-1 ('1^{st} port beamid') allocated to the first port among the information 1060-1 on the first port.

In FIGS. 10C and 10D, although a case that a value of the 'RBGenable' is a first value and a case thay the value of the 'RBGenable' is a second value are respectively illustrated, it is not limited thereto. Whether the resource allocation area is indicated based on the plurality of resource groups may be independently set for each of multiple ports. For example, the resource allocation area may not be indicated based on the plurality of resource groups in the first port, and the resource allocation area may be indicated based on the plurality of resource groups in the n-th port. In this case, a C-plane message may include the portion 1050 of the information on the first port of FIG. 10C and the information 1060-n on the n-th port of FIG. 10D.

According to an embodiment, the section extension information illustrated in FIG. 10C and/or FIG. 10D may be configured based on a section extension type 10. An example of the C-plane message including the section extension information configured based on the section extension type 10 will be described later in FIG. 15.

FIG. 11A illustrates an example of information for indicating a resource allocation area for each of multiple ports.

Referring to FIG. 11A, a C-plane message may include section information for indicating a resource area and section extension information. For example, the section information may include information for indicating the number of a plurality of resource blocks configuring the resource area (e.g., the 'numPrbc' of FIG. 5) and information for indicating a start resource block of the plurality of resource blocks (e.g., the 'startPrbc' of FIG. 5).

According to an embodiment, the C-plane message may include information for indicating at least one resource group configuring a resource allocation area for one port among a plurality of resource groups configured based on the plurality of resource blocks and information for indicating resource blocks for each of the plurality of resource groups.

For example, the C-plane message may include information on n ports. Although not illustrated, the C-plane message may include the 'numPortc'. The 'numPortc' may mean the number of ports added to one port. As an example, when a value of the 'numPortc' is 1, the C-plane message may include information on 2 ports. As an example, when the value of the 'numPortc' is 3, the C-plane message may include information on 4 ports.

For example, the C-plane message may include information 1110-1 on a first port to information 1110-n on an n-th port. Each of the information 1110-1 on the first port to the information 1110-n on the n-th port may include a beam identifier ('beamid') (or a user equipment identifier ('ueid')) allocated to a corresponding port and/or information ('GroupBitmap') for indicating at least one resource group allocated to the corresponding port. The C-plane message may further include information 1120 ('numPRBGroup') indicating the number of the plurality of resource groups. The C-plane message may further include indicators 1130-1 to 1130-n for indicating the resource blocks for each of the plurality of resource groups.

As an example, information 1110-1 on the first port may include a beam identifier 1140-1 ('1st port beamid') (or a user equipment identifier) allocated to the first port and/or information 1150-1 ('1^{st} GroupBitmap') for indicating at least one resource group allocated to the first port.

As an example, information 1110-n on the n-th port may include a beam identifier 1140-n ('(numPortc+1)^{th} port beamid') (or a user equipment identifier) allocated to the n-th port and/or information 1150-n ('(numPortc+1)^{th} GroupBitmap') for indicating at least one resource group allocated to the n-th port.

As an example, the indicator 1130-1 for indicating at least one resource block for a first resource group may be configured based on the number of the at least one resource block for the first resource group and a start resource block of the at least one resource block. As an example, the indicator 1130-n for indicating at least one resource block for an n-th resource group may be configured based on the number of the at least one resource block for the n-th resource group and a start resource block of the at least one resource block.

A specific example of an indicator (e.g., the indicator 1130-1 to the indicator 1130-n) for indicating at least one resource block for one resource group will be described later in FIGS. 12A and 12B.

For example, the beam identifiers 1140-1 to 1140-n allocated to one port may be configured with 15 bits. The information 1150-1 to 1150-n for indicating the at least one resource group allocated to one port may be configured with 8 bits. The information 1120 for indicating the number of the plurality of resource groups may be configured with 3 bits. The indicators 1130-1 to 1130-n configured based on the number of the at least one resource block for one resource group and the start resource block of the at least one resource block may be configured with 16 bits.

According to an embodiment, at least a portion of the information illustrated in FIG. 11A may be included in the section information. A remaining portion of the information illustrated in FIG. 11A may be included in the section extension information.

For example, the beam identifier 1140-1 allocated to the first port may be included in the section information. Remaining information excluding the beam identifier 1140-1 allocated to the first port among the information illustrated in FIG. 11A may be included in the section extension information. An example in which the remaining information excluding the beam identifier 1140-1 allocated to the first port among the information 1110-1 on the first port to the information 1110-n on the n-th port is included in the section extension information will be described later in FIG. 11B.

For example, the information 1110-1 on the first port may be included in the section information. Information 1110-2 on a second port to the information 1110-n on the n-th port may be included in the section extension information.

According to an embodiment, although the information illustrated in FIG. 11A (e.g., the information 1110-1 to 1110-n, the information 1120, and the indicators 1130-1 to 1130-n) is illustrated as being configured as one field, this is for convenience of description and is not limited thereto. The information illustrated in FIG. 11A may be included in various forms in the C-plane message. According to embodiments, at least a portion or all of the information illustrated in FIG. 11A may be included in the C-plane message explicitly or implicitly.

FIG. 11B illustrates an example of section extension information for indicating a resource allocation area for each of multiple ports.

Referring to FIG. 11A, section extension information may include at least a portion of the information illustrated in FIG. 11A. For example, the section extension information may include a portion of the information 1110-1 on the first port of FIG. 11A. The section extension information may include the information 1110-2 on the second port to the information 1110-n on the n-th port of FIG. 11A.

For example, the section extension information may include the information 1150-1 ('1^{st} GroupBitmap') for indicating the at least one resource group allocated to the first port among the information 1110-1 on the first port of FIG. 11A. The section extension information may include all of the information 1110-2 on the second port to the information 1110-n on the n-th port of FIG. 11A.

The section extension information may not include the beam identifier 1140-1 ('1^{st} port beamid') allocated to the first port among the information 1110-1 on the first port of FIG. 11A. The beam identifier 1140-1 ('1^{st} port beamid') allocated to the first port may be included in section information (e.g., the section information 530 of FIG. 5). Since the section extension information is indicated after the section information, the section extension information may not include the beam identifier 1140-1 ('1^{st} port beamid') allocated to the first port among the information 1110-1 on the first port of FIG. 11A.

According to an embodiment, the section extension information illustrated in FIG. 11B may be configured based on a section extension type 10. An example of a C-plane message including the section extension information configured based on the section extension type 10 will be described later in FIG. 16.

FIG. 12A illustrates an example of a scheme for indicating at least one resource block.

FIG. 12B illustrates an example of an indicator set according to a scheme for indicating at least one resource block.

Referring to FIGS. 12A and 12B, a resource allocation area 1210 may be configured in a resource area 1200. The resource allocation area 1210 may be set in the resource area 1200.

The resource area 1200 may be configured based on a start resource block 1211 of the resource area 1200 and the number 1212 of resource blocks of the resource area 1200. The resource allocation area 1210 may be configured based on a start resource block S of the resource allocation area 1210 and the number L of resource blocks of the resource allocation area 1210.

When the start resource block 1211 and the number 1212 of resource blocks are determined, the resource allocation area 1210 may be indicated through one indicator ('prbIndication') in the resource area 1200 by using the following equation. $\begin{matrix}if \left(L-1\right) \leq \left⌊\frac{numPrbC}{2}\right⌋ \\ prbindication = numPrbC * \left(L-1\right) + S \\ else \\ prbindication = numPrbC * \left(numPrbC-L+1\right) + \left(numPrbC-1-S\right) \\ end\end{matrix}$

Referring to Equation 1, the 'prbIndication' is a value indicating a position of the resource allocation area 1210 based on the start resource block 1211. The 'numPrbC' is the number 1212 of resource blocks. The L is the number of resource blocks of the resource allocation area 1210. The S is the start resource block of the resource allocation area 1210. The $\left⌊x\right⌋$ is a floor function (or a floor operation) for x. Although not shown in Equation 1, 'startPrbC' is the start resource block 1211 of the resource area 1200.

When the 'numPrbC' is 14 and the 'startPrbC' is 0, the 'prbIndication' may be set as shown in FIG. 12B based on Equation 1. FIG. 12B indicates the value of the 'prbIndication' according to the start resource block S of the resource allocation area 1210 and the number L of resource blocks of the resource allocation area 1210.

For example, when the start resource block S is 5 and the number L of resource blocks is 8, the value of the 'prbIndication' is '103'. When a DU 210 transmits the 'prbIndication' set to '103' to an RU 220, the RU 220 may identify that the start resource block S is 5 and the number L of resource blocks is 8. As described above, when the 'prbIndication' is transmitted, the number of transmitted bits may be reduced. The 'prbIndication' may be used to indicate at least one resource block allocated to one port in FIG. 9A. The 'prbIndication' may be used to indicate at least one resource block configuring one resource group in FIG. 11A. Since the start resource block 1211 and the number 1212 of resource blocks of the resource area 1200 may be transmitted through the section information 530 of FIG. 5, at least one resource block allocated to one port (or at least one resource block configuring one resource group) may be indicated through the 'prbIndication'.

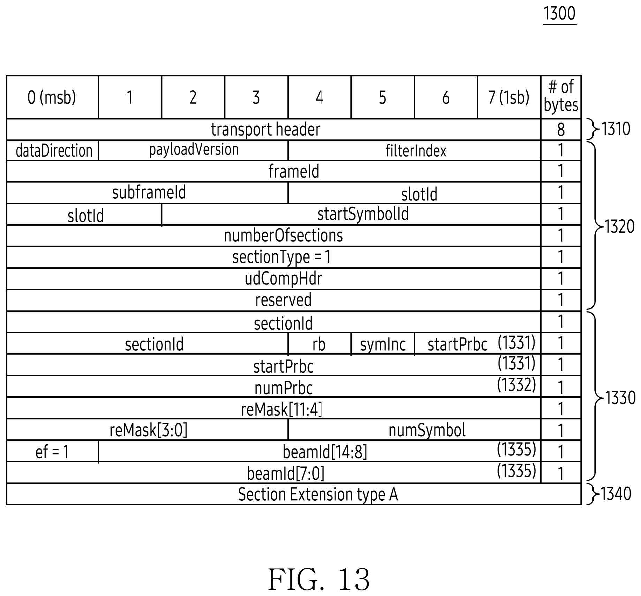

FIG. 13 illustrates an example of a C-plane message for indicating at least one resource block allocated to each of multiple ports.

Referring to FIG. 13, a C-plane message 1300 may be used to indicate at least one resource block allocated to each of multiple ports. For example, the C-plane message 1300 may correspond to at least a portion of the C-plane message 500 illustrated in FIG. 5.

For example, section information 1330 of the C-plane message 1300 may include a beam identifier (ID) for one port and/or information on a resource area for a section. The section information 1330 including the beam identifier (ID) for one port and/or the information on the resource area for the section may be included in the C-plane message 1300 configured based on one section type among a plurality of section types (e.g., section types 1 to 8). For example, the section information 1330 including the beam identifier (ID) for one port and/or the information on the resource area for the section may be included in the C-plane message 1300 configured based on one section type among section types 1, 3, and 5. The section information 1330 may be configured based on one section type among the section types 1, 3, and 5.

In FIG. 13, an example in which the section information 1330 including the beam identifier (ID) for one port and/or the information on the resource area for the section is included in the C-plane message 1300 configured based on the section type 1 is described, but is not limited thereto. For example, the section information 530 including the beam identifier (ID) for one port and/or the information on the resource area for the section may also be included in the C-plane message configured based on one among the plurality of section types (e.g., the section types 1 to 8).

The C-plane message 1300 may include transport header information 1310, common header information 1320, section information 1330, and section extension information 1340. The transport header information 1310 may correspond to the transport header information 510 of FIG. 5. The common header information 1320 may correspond to the common header information 1320 of FIG. 5. The section information 1330 may correspond to the section information 1330 of FIG. 5.

For example, the resource area for the section may be configured with a plurality of resource blocks. The section information 1330 may include information 1331 ('startPrbc') indicating a start resource block of the plurality of resource blocks. The section information 1330 may include information 1332 ('numPrbc') indicating the number of the plurality of resource blocks. The section information 1330 may include a beam identifier (or a user equipment identifier) 1335 ('beamId') allocated to a first port.

According to an embodiment, the C-plane message 1300 may indicate the at least one resource block allocated to each of multiple ports. The section extension information 1340 may indicate the at least one resource block allocated to each of the multiple ports.

For example, the section extension information 1340 may be configured based on a section extension type A. The section extension type A may be configured with at least one among a plurality of section extension types. For example, the section extension type A may include a section extension type 1 to a section extension type 23. For example, the section extension type may include a section extension type 10. For example, the section extension type A may be configured with a combination of the section extension type 10 and another section extension type. For example, the section extension type A may be distinguished from the section extension type 1 to the section extension type 23.

In FIGS. 14 to 16 below, an example of a C-plane message for indicating the at least one resource block allocated to each of the multiple ports will be described. In FIGS. 14 to 16, an example in which the at least one resource block allocated to each of the multiple ports is indicated through section extension information of the C-plane message is illustrated, but is not limited thereto. The at least one resource block allocated to each of the multiple ports may also be indicated by section information of the C-plane message.

FIG. 14 illustrates an example of a C-plane message for indicating at least one resource block allocated to each of multiple ports.

Referring to FIG. 14, a C-plane message 1400 may include transport header information 1410, common header information 1420, section information 1430, and section extension information 1440. The transport header information 1410 may correspond to the transport header information 1310 of FIG. 13. The common header information 1420 may correspond to the common header information 1420 of FIG. 13. The section information 1430 may correspond to the section information 1430 of FIG. 13. The section extension information 1440 may be configured based on a section extension type 10.

For example, a resource area for a section may be configured with a plurality of resource blocks. The section information 1430 may include information 1431 ('startPrbc') indicating a start resource block of the plurality of resource blocks. The section information 1430 may include information 1432 ('numPrbc') indicating the number of the plurality of resource blocks. The section information 1430 may include a beam identifier (or a user equipment identifier) 1450-1 ('beamId') allocated to a first port.

For example, the section extension information 1440 may include information 1444 ('beamGroupType') indicating a type of beam grouping. In order to indicate at least one resource block allocated to each of multiple ports, a value of the 'beamGroupType' may be set to '11' (or '11b', '2').

For example, the C-plane message 1400 may include information on n ports. The C-plane message 1400 may include information 1443 ('numPortc') indicating the number of ports added to one port. As an example, when a value of the 'numPortc' is 1, the C-plane message 1400 may include information on 2 ports. As an example, when the value of the 'numPortc' is 3, the C-plane message 1400 may include information on 4 ports.

According to an embodiment, the C-plane message 1400 may include the information illustrated in FIG. 9A in order to indicate the at least one resource block allocated to each of the multiple ports.

The C-plane message 1400 may include information 1441-1 on the first port to information 1441-n on an n-th port. For example, the beam identifier (or a user equipment identifier) 1450-1 allocated to the first port among the information 1441-1 on the first port may be included in the section information 1430. An indicator 1460-1 for indicating at least one resource block allocated to the first port among the information 1441-1 on the first port may be included in the section extension information 1440. Information 1441-2 on a second port to the information 1441-n on the n-th port may be included in the section extension information 1440.

As an example, the information 1441-2 on the second port to the information 1441-n on the n-th port may respectively include beam identifiers 1450-2 to 1450-n allocated to a corresponding port and indicators 1460-2 to 1460-n for indicating at least one resource block allocated to the corresponding port.

For example, the indicators 1460-1 to 1460-n may indicate the at least one resource block allocated to the corresponding port based on FIGS. 12A and 12B. Since the information 1431 ('startPrbc') indicating the start resource block and the information 1432 ('numPrbc') indicating the number of the plurality of resource blocks are included in the section information 1430, the at least one resource block (or a resource allocation area) allocated to the corresponding port may be indicated through the indicators 1460-1 to 1460-n.

For example, the section extension information 1440 may include information 1442 for zero padding.

According to an embodiment, when duplicated allocation of an endpoint with respect to the same user equipment identifier (or beam identifier) is allowed, a PUSCH scheduling operation according to a designated communication standard (e.g., 3GPP) may be supported through the C-plane message 1400.

FIG. 15 illustrates an example of a C-plane message for indicating at least one resource block allocated to each of multiple ports.

Referring to FIG. 15, a C-plane message 1500 may include transport header information 1510, common header information 1520, section information 1530, and section extension information 1540. The transport header information 1510 may correspond to the transport header information 1310 of FIG. 13. The common header information 1520 may correspond to the common header information 1520 of FIG. 13. The section information 1530 may correspond to the section information 1530 of FIG. 13. The section extension information 1540 may be configured based on a section extension type 10.

For example, a resource area for a section may be configured with a plurality of resource blocks. The section information 1530 may include information 1531 ('startPrbc') indicating a start resource block of the plurality of resource blocks. The section information 1530 may include information 1532 ('numPrbc') indicating the number of the plurality of resource blocks. The section information 1530 may include a beam identifier (or a user equipment identifier) 1550-1 ('beamId') allocated to a first port.

For example, the section extension information 1540 may include information 1544 ('beamGroupType') indicating a type of beam grouping. In order to indicate at least one resource block allocated to each of multiple ports, a value of the 'beamGroupType' may be set to '11' (or '11b', '2').

For example, the C-plane message 1500 may include information on n ports. The C-plane message 1500 may include information 1543 ('numPortc') indicating the number of ports added to one port. As an example, when a value of the 'numPortc' is 1, the C-plane message 1500 may include information on 2 ports. As an example, when the value of the 'numPortc' is 3, the C-plane message 1500 may include information on 4 ports.

According to an embodiment, the C-plane message 1500 may include the information illustrated in FIGS. 10A and 10B in order to indicate the at least one resource block allocated to each of the multiple ports.

The C-plane message 1500 may include information 1541-1 on the first port to information 1541-n on an n-th port. For example, a beam identifier (or a user equipment identifier) 1550-1 allocated to the first port among the information 1541-1 on the first port may be included in the section information 1530. Among the information 1541-1 on the first port, information 1562 ('1^{st} port startPrbcPerPort') for indicating a start resource block of at least one resource block allocated to the first port and information 1563 ('1^{st} port numPrbcPerPort') for indicating the number of the at least one resource block allocated to the first port may be included in the section extension information 1540. Information 1541-2 on a second port to the information 1541-n on the n-th port may be included in the section extension information 1540. For example, in the section extension information 1540, the information 1541-2 on the second port to the information 1541-n on the n-th port may respectively include beam identifiers 1550-2 to 1550-n allocated to a corresponding port.

As an example, according to information 1561, 1571, ..., 1581, and 1591 ('RBGenable') for indicating whether a resource allocation area is indicated based on a plurality of resource groups, information included in each of the information 1541-1 on the first port to the information 1541-n on the n-th port may be differently configured.

For example, when the resource allocation area is continuous, a value of the 'RBGenable' may be set to a first value (e.g., '0'). When the resource allocation area is discontinuous, the value of the 'RBGenable' may be set to a second value (e.g., '1').

For example, when the value of the 'RBGenable' is the first value (e.g., '0'), the resource allocation area may not be indicated based on the plurality of resource groups in the corresponding port. When the value of the 'RBGenable' is the second value (e.g., '1'), the resource allocation area may be indicated based on the plurality of resource groups in the corresponding port. FIG. 15 illustrates an example in which the value of the 'RBGenable' is set to the first value (e.g., '0') in the information 1541-1 on the first port and the information 1541-n on the n-th port, and the value of the 'RBGenable' is set to the second value (e.g., '1') in the information 1541-2 on the second port and information 1541-(n-1) on an (n-1)-th port.

Since the value of the 'RBGenable' is set to the first value (e.g., '0') in the information 1541-(n-1) on the (n-1)-th port, a structure of the information 1541-(n-1) on the (n-1)-th port may be identically or similarly configured to a structure of the information 1541-1 on the first port. For example, the information 1541-(n-1) on the (n-1)-th port may include a beam identifier (or a user equipment identifier) 1550-(n-1) allocated to the (n-1)-th port, information 1582 ('numPortc^{th} port startPrbcPerPort') for indicating a start resource block of at least one resource block allocated to the (n-1)-th port, and information 1583 ('numPortc ^{th} port numPrbcPerPort') for indicating the number of the at least one resource block allocated to the (n-1)-th port.

Since the value of the 'RBGenable' is set to the second value (e.g., '1') in the information 1541-2 on the second port and the information 1541-n on the n-th port, a structure of the information 1541-n on the n-th port may be identically or similarly configured to a structure of the information 1541-2 on the second port. For example, the information 1541-2 on the second port may include the beam identifier (or user equipment identifier) 1550-2 allocated to the second port, information 1573 (RBGUnit) for indicating a unit of a plurality of resource groups, and/or information 1572 ('2^{nd} prbBitmap') for indicating at least one resource group allocated to the second port. For example, the information 1541-n on the n-th port may include the beam identifier (or user equipment identifier) 1550-n allocated to the n-th port, information 1593 (RBGUnit) for indicating a unit of a plurality of resource groups, and/or information 1592 ('(numPortc+1)^{th} prbBitmap') for indicating at least one resource group allocated to the n-th port.

For example, the information 1572 and 1592 for indicating the at least a resource group allocated to one port may indicate, based on a bitmap, the at least one resource group among the plurality of resource groups configured according to the information 1573 and 1573 for indicating the unit of the plurality of resource groups.

For example, the section extension information 1540 may include information 1542 for zero padding.

According to an embodiment, a PUSCH scheduling operation according to a designated communication standard (e.g., 3GPP) may be supported through the C-plane message 1500.

FIG. 16 illustrates an example of a C-plane message for indicating at least one resource block allocated to each of multiple ports.

Referring to FIG. 16, a C-plane message 1600 may include transport header information 1610, common header information 1620, section information 1630, and section extension information 1640. The transport header information 1610 may correspond to the transport header information 1310 of FIG. 13. The common header information 1620 may correspond to the common header information 1620 of FIG. 13. The section information 1630 may correspond to the section information 1630 of FIG. 13. The section extension information 1640 may be configured based on a section extension type 10.

For example, a resource area for a section may be configured with a plurality of resource blocks. The section information 1630 may include information 1631 ('startPrbc') indicating a start resource block of the plurality of resource blocks. The section information 1630 may include information 1632 ('numPrbc') indicating the number of the plurality of resource blocks. The section information 1630 may include a beam identifier (or a user equipment identifier) 1650-1 ('beamId') allocated to a first port.

For example, the section extension information 1640 may include information 1644 ('beamGroupType') indicating a type of beam grouping. In order to indicate at least one resource block allocated to each of multiple ports, a value of the 'beamGroupType' may be set to '11' (or '11b', '2').

For example, the C-plane message 1600 may include information on n ports. The C-plane message 1600 may include information 1643 ('numPortc') indicating the number of ports added to one port. As an example, when a value of the 'numPortc' is 1, the C-plane message 1600 may include information on 2 ports. As an example, when the value of the 'numPortc' is 3, the C-plane message 1600 may include information on 4 ports.

According to an embodiment, the C-plane message 1600 may include the information illustrated in FIG. 11A in order to indicate the at least one resource block allocated to each of the multiple ports.

The C-plane message 1600 may include information 1641-1 on a first port to information 1641-n on an n-th port. For example, a beam identifier (or a user equipment identifier) 1650-1 allocated to the first port among the information 1641-1 on the first port may be included in the section information 1630. Information 1660-1 ('1^{st} GroupBitmap') for indicating at least one resource group allocated to the first port among the information 1641-1 on the first port may be included in the section extension information 1640. Information 1641-2 on a second port to the information 1641-n on the n-th port may be included in the section extension information 1640. For example, in the section extension information 1640, the information 1641-2 on the second port to the information 1641-n on the n-th port may respectively include beam identifiers 1650-2 to 1650-n allocated to a corresponding port and information 1660-2 to 1660-n for indicating at least one resource group allocated to the corresponding port.

For example, the section extension information 1640 may further include information 1645 ('numPRBGroup') on the number of a plurality of groups and indicators 1651-1 to 1651-n for indicating at least one resource block for one resource group. The indicators 1651-1 to 1651-n may indicate the at least one resource block for the corresponding group based on FIGS. 12A and 12B. Since the information 1631 ('startPrbc') indicating the start resource block and the information 1632 ('numPrbc') indicating the number of the plurality of resource blocks are included in the section information 1630, the at least one resource block for the corresponding group (or configuring the corresponding group) may be indicated through the indicators 1651-1 to 1651-n.

For example, the section extension information 1640 may include information 1642 for zero padding.

According to an embodiment, a PUSCH scheduling operation according to a designated communication standard (e.g., 3GPP) may be supported through the C-plane message 1600.

According to an embodiment, a method performed by a device of a distributed unit (DU) may comprise generating a control plane (C-plane) message including section information for indicating a resource area and section extension information. The method may comprise transmitting the C-plane message to a radio unit (RU). The C-plane message may indicate a resource allocation area for each port among multiple ports for a group configuration in the resource area.

According to an embodiment, the section information may include information for indicating the number of a plurality of resource blocks configuring the resource area and information for indicating a start resource block of the plurality of resource blocks.

According to an embodiment, the control plane message may include information for indicating at least one resource block configuring a resource allocation area for one port among the plurality of resource blocks. The information for indicating the at least one resource block may include an indicator configured based on the number of the at least one resource block and a start resource block of the at least one resource block.

According to an embodiment, the control plane message may include information for indicating at least one resource block configuring a resource allocation area for one port among the plurality of resource blocks. The information for indicating the at least one resource block may include information for indicating the number of the at least one resource block and information on a start resource block of the at least one resource block.

According to an embodiment, the control plane message may include information for indicating at least one resource group configuring a resource allocation area for one port among a plurality of resource groups configured based on the plurality of resource blocks.

According to an embodiment, the control plane message may include information for indicating resource blocks for each of the plurality of resource groups.

According to an embodiment, a method performed by a device of a radio unit (RU) may comprise receiving, from a distributed unit (DU), a control plane (C-plane) message including section information for indicating a resource area and section extension information. The method may comprise identifying, based on the control plane message, a resource allocation area for each port among multiple ports for a group configuration in the resource area.

According to an embodiment, the section information may include information for indicating the number of a plurality of resource blocks configuring the resource area and information for indicating a start resource block of the plurality of resource blocks.

According to an embodiment, the control plane message may include information for indicating at least one resource block configuring a resource allocation area for one port among the plurality of resource blocks. The information for indicating the at least one resource block may include an indicator configured based on the number of the at least one resource block and a start resource block of the at least one resource block.

According to an embodiment, the control plane message may include information for indicating at least one resource block configuring a resource allocation area for one port among the plurality of resource blocks. The information for indicating the at least one resource block may include information for indicating the number of the at least one resource block and information on a start resource block of the at least one resource block.

According to an embodiment, the control plane message may include information for indicating at least one resource group configuring a resource allocation area for one port among a plurality of resource groups configured based on the plurality of resource blocks.

According to an embodiment, the control plane message may include information for indicating resource blocks for each of the plurality of resource groups.

According to an embodiment, a device of a distributed unit (DU) may comprise a fronthaul transceiver, memory including a storage medium storing one or more instructions, and at least one processor including processing circuitry. The one or more instructions, when executed by the at least one processor individually or collectively, may cause the device to generate a control plane (C-plane) message including section information for indicating a resource area and section extension information. The one or more instructions, when executed by the at least one processor individually or collectively, may cause the device to transmit, through the fronthaul transceiver, the control plane message to a radio unit (RU). The control plane message may indicate a resource allocation area for each port among multiple ports for a group configuration in the resource area.

According to an embodiment, the section information may include information for indicating the number of a plurality of resource blocks configuring the resource area and information for indicating a start resource block of the plurality of resource blocks.

According to an embodiment, the control plane message may include information for indicating at least one resource block configuring a resource allocation area for one port among the plurality of resource blocks. The information for indicating the at least one resource block may include an indicator configured based on the number of the at least one resource block and a start resource block of the at least one resource block.

According to an embodiment, the control plane message may include information for indicating at least one resource block configuring a resource allocation area for one port among the plurality of resource blocks. The information for indicating the at least one resource block may include information for indicating the number of the at least one resource block and information on a start resource block of the at least one resource block.

According to an embodiment, the control plane message may include information for indicating at least one resource group configuring a resource allocation area for one port among a plurality of resource groups configured based on the plurality of resource blocks.

According to an embodiment, the control plane message may include information for indicating resource blocks for each of the plurality of resource groups.

According to an embodiment, a device of a radio unit (RU) may include a fronthaul transceiver, a radio frequency (RF) transceiver, memory including a storage medium storing one or more instructions, and at least one processor including processing circuitry. The one or more instructions, when executed by the at least one processor individually or collectively, may cause the device to receive, from a distributed unit (DU), a control plane (C-plane) message including section information for indicating a resource area and section extension information by using the fronthaul transceiver. The one or more instructions, when executed by the at least one processor individually or collectively, may cause the device to identify, based on the control plane message, a resource allocation area for each port among multiple ports for a group configuration in the resource area.

According to an embodiment, the section information may include information for indicating the number of a plurality of resource blocks configuring the resource area and information for indicating a start resource block of the plurality of resource blocks.

According to an embodiment, the control plane message may include information for indicating at least one resource block configuring a resource allocation area for one port among the plurality of resource blocks. The information for indicating the at least one resource block may include an indicator configured based on the number of the at least one resource block and a start resource block of the at least one resource block.

According to an embodiment, the control plane message may include information for indicating at least one resource block configuring a resource allocation area for one port among the plurality of resource blocks. The information for indicating the at least one resource block may include information for indicating the number of the at least one resource block and information on a start resource block of the at least one resource block.

According to an embodiment, the control plane message may include information for indicating at least one resource group configuring a resource allocation area for one port among a plurality of resource groups configured based on the plurality of resource blocks.

According to an embodiment, the control plane message may include information for indicating resource blocks for each of the plurality of resource groups.

According to an embodiment, a method performed by a distributed unit (DU) may comprise generating a control plane (C-plane) message including section information for indicating a resource area and section extension information, and transmitting the C-plane message to a radio unit (RU). The section extension information may include resource information for each user equipment (UE) of a plurality of UEs related to a radio unit (RU) connected to the DU. The resource information may include first information and second information. The first information may indicate a start resource block of resource blocks continuously allocated to a corresponding UE in the resource area. The first information and the second information may be used to indicate the resource blocks continuously allocated to the corresponding UE.

For example, the section extension information may be used for demodulation reference signal-beamforming-equalizing (DMRS-BF-EQ) or DMRS beamforming-nonequalizing (DMRS-BF-NEQ).

For example, operations for the DMRS-BF-EQ or the DMRS-BF-NEQ in the RU may include a DMRS extraction and a DMRS channel estimation. Operations for the DMRS-BF-EQ or the DMRS-BF-NEQ in the DU may include a layer demapping and a decoding.

For example, the second information may include information for identifying the number of the resource blocks continuously allocated to the corresponding UE.

For example, the section extension information may further include a value related to an identifier (ID) for the corresponding UE.

According to an embodiment, a method performed by a radio unit (RU) may comprise receiving, from a distributed unit (DU), a control plane (C-plane) message including section information for indicating a resource area and section extension information. The section extension information may include resource information for each user equipment (UE) of a plurality of UEs related to a radio unit (RU) connected to the DU. The resource information may include first information and second information. The first information may indicate a start resource block of resource blocks continuously allocated to a corresponding UE in the resource area. The first information and the second information may be used to indicate the resource blocks continuously allocated to the corresponding UE. The method may comprise performing, based on the resource information allocated for each user equipment (UE), an uplink (UL) communication.

For example, the section extension information may be used for demodulation reference signal-beamforming-equalizing (DMRS-BF-EQ) or DMRS beamforming-nonequalizing (DMRS-BF-NEQ).

For example, operations for the DMRS-BF-EQ or the DMRS-BF-NEQ in the RU may include a DMRS extraction and a DMRS channel estimation. Operations for the DMRS-BF-EQ or the DMRS-BF-NEQ in the DU may include a layer demapping and a decoding.

For example, the second information may include information for identifying the number of the resource blocks continuously allocated to the corresponding UE.

For example, the section extension information may further include a value related to an identifier (ID) for the corresponding UE.

According to an embodiment, a device for performing functions of a distributed unit (DU) may comprise at least one fronthaul transceiver including communication circuitry, at least one processor including processing circuitry, and memory storing instructions, including one or more storage media. The instructions, when executed by the at least one processor individual or collectively, may cause the device to generate a control plane (C-plane) message including section information for indicating a resource area and section extension information, and transmit the C-plane message to a radio unit (RU). The section extension information may include resource information for each user equipment (UE) of a plurality of UEs related to a radio unit (RU) connected to the DU. The resource information may include first information and second information. The first information may indicate a start resource block of resource blocks continuously allocated to a corresponding UE in the resource area. The first information and the second information may be used to indicate the resource blocks continuously allocated to the corresponding UE.

For example, the section extension information may be used for demodulation reference signal-beamforming-equalizing (DMRS-BF-EQ) or DMRS beamforming-nonequalizing (DMRS-BF-NEQ).

For example, operations for the DMRS-BF-EQ or the DMRS-BF-NEQ in the RU may include a DMRS extraction and a DMRS channel estimation. Operations for the DMRS-BF-EQ or the DMRS-BF-NEQ in the DU may include a layer demapping and a decoding.

For example, the second information may include information for identifying the number of the resource blocks continuously allocated to the corresponding UE.

For example, the section extension information may further include a value related to an identifier (ID) for the corresponding UE.

According to an embodiment, a device for performing functions of a radio unit (RU) may comprise at least one fronthaul transceiver including communication circuitry, at least one processor including processing circuitry, and memory storing instructions, including one or more storage media. The instructions, when executed by the at least one processor individual or collectively, may cause the device to receive, from a distributed unit (DU), a control plane (C-plane) message including section information for indicating a resource area and section extension information. The section extension information may include resource information for each user equipment (UE) of a plurality of UEs related to a radio unit (RU) connected to the DU. The resource information may include first information and second information. The first information may indicate a start resource block of resource blocks continuously allocated to a corresponding UE in the resource area. The first information and the second information may be used to indicate the resource blocks continuously allocated to the corresponding UE. The instructions, when executed by the at least one processor individual or collectively, may cause the device to perform, based on the resource information allocated for each user equipment (UE), an uplink (UL) communication.

For example, the section extension information may be used for demodulation reference signal-beamforming-equalizing (DMRS-BF-EQ) or DMRS beamforming-nonequalizing (DMRS-BF-NEQ).

For example, operations for the DMRS-BF-EQ or the DMRS-BF-NEQ in the RU may include a DMRS extraction and a DMRS channel estimation. Operations for the DMRS-BF-EQ or the DMRS-BF-NEQ in the DU may include a layer demapping and a decoding.

For example, the second information may include information for identifying the number of the resource blocks continuously allocated to the corresponding UE.

For example, the section extension information may further include a value related to an identifier (ID) for the corresponding UE.

According to an embodiment, in a section extension type 10, when 'beamGroupType' is set to '11b', startPrbc and numPrbc for each end point may be indicated through the above-described control plane message. When a DU indicates MU-MIMO scheduling information to an RU through the above-described control plane message, a case that startPrbc and numPrbc for each equipment are different from each other may also be supported.

Methods according to embodiments described in claims or specifications of the present disclosure may be implemented as a form of hardware, software, or a combination of hardware and software.

In a case of implementing as software, a computer-readable storage medium for storing one or more programs (software module) may be provided. The one or more programs stored in the computer-readable storage medium are configured for execution by one or more processors in an electronic device. The one or more programs include instructions that cause the electronic device to execute the methods according to embodiments described in claims or specifications of the present disclosure. The one or more programs may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. In the case of being distributed online, at least part of the computer program product may be temporarily generated or at least temporarily stored in the machine-readable storage medium, such as memory of the manufacturer's server, the application store's server, or a relay server.

Such a program (software module, software) may be stored in a random access memory, a non-volatile memory including a flash memory, a read only memory (ROM), an electrically erasable programmable read only memory (EEPROM), a magnetic disc storage device, an optical storage device (e.g., a compact disc-ROM (CD-ROM), digital versatile discs (DVDs), or other formats), or a magnetic cassette. Alternatively, it may be stored in memory configured with a combination of some or all of them. In addition, a plurality of configuration memories may be included.

Additionally, a program may be stored in an attachable storage device that may be accessed through a communication network such as the Internet, Intranet, local area network (LAN), wide area network (WAN), or storage area network (SAN), or a combination thereof. Such a storage device may be connected to a device performing an embodiment of the present disclosure through an external port. In addition, a separate storage device on the communication network may also be connected to a device performing an embodiment of the present disclosure.

In the above-described specific embodiments of the present disclosure, components included in the disclosure are expressed in the singular or plural according to the presented specific embodiment. However, the singular or plural expression is selected appropriately according to a situation presented for convenience of explanation, and the present disclosure is not limited to the singular or plural component, and even components expressed in the plural may be configured in the singular, or a component expressed in the singular may be configured in the plural.

According to various embodiments, one or more components or operations of the above-described components may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be executed sequentially, in parallel, repeatedly, or heuristically, or one or more of the operations may be executed in a different order or omitted, or one or more other operations may be added.

Meanwhile, specific embodiments have been described in the detailed description of the present disclosure, and of course, various modifications are possible without departing from the scope of the present disclosure.

## Claims

1. A method performed by a distributed unit (DU), comprising:
generating a control plane (C-plane) message including section information for indicating a resource area and section extension information; and
transmitting the C-plane message to a radio unit (RU), wherein:
the section extension information includes resource information allocated for each user equipment (UE) of a plurality of UEs related to a radio unit (RU) connected to the DU,
the resource information includes first information and second information,
the first information indicates a start resource block of resource blocks continuously allocated to a corresponding UE in the resource area, and
the first information and the second information are used to indicate the resource blocks continuously allocated to the corresponding UE.

2. The method of claim 1, wherein the section extension information is used for demodulation reference signal-beamforming-equalizing (DMRS-BF-EQ) or DMRS beamforming-nonequalizing (DMRS-BF-NEQ).

3. The method of claim 2, wherein operations for the DMRS-BF-EQ or the DMRS-BF-NEQ in the RU includes a DMRS extraction and a DMRS channel estimation, and
wherein operations for the DMRS-BF-EQ or the DMRS-BF-NEQ in the DU includes a layer demapping and a decoding.

4. The method of claim 1, wherein the second information includes information for identifying the number of the resource blocks continuously allocated to the corresponding UE.

5. The method of claim 1, wherein the section extension information further includes a value related to an identifier (ID) for the corresponding UE.

6. A method performed by a radio unit (RU), comprising:
receiving, from a distributed unit (DU), a control plane (C-plane) message including section information for indicating a resource area and section extension information, wherein:
the section extension information includes resource information allocated for each user equipment (UE) of a plurality of UEs related to a radio unit (RU) connected to the DU,
the resource information includes first information and second information,
the first information indicates a start resource block of resource blocks continuously allocated to a corresponding UE in the resource area, and
the first information and the second information are used to indicate the resource blocks continuously allocated to the corresponding UE; and
performing, based on the resource information allocated for each user equipment (UE), an uplink (UL) communication.

7. The method of claim 6, wherein the section extension information is used for demodulation reference signal-beamforming-equalizing (DMRS-BF-EQ) or DMRS beamforming-nonequalizing (DMRS-BF-NEQ).

8. The method of claim 7, wherein operations for the DMRS-BF-EQ or the DMRS-BF-NEQ in the RU includes a DMRS extraction and a DMRS channel estimation, and
wherein operations for the DMRS-BF-EQ or the DMRS-BF-NEQ in the DU includes a layer demapping and a decoding.

9. The method of claim 6, wherein the second information includes information for identifying the number of the resource blocks continuously allocated to the corresponding UE.

10. The method of claim 6, wherein the section extension information further includes a value related to an identifier (ID) for the corresponding UE.

11. A device for performing functions of a distributed unit (DU), comprising:
at least one fronthaul transceiver including communication circuitry;
at least one processor including processing circuitry; and
memory storing instructions, including one or more storage media,
wherein the instructions, when executed by the at least one processor individual or collectively, cause the device to:
generate a control plane (C-plane) message including section information for indicating a resource area and section extension information; and
transmit the C-plane message to a radio unit (RU), wherein:
the section extension information includes resource information allocated for each user equipment (UE) of a plurality of UEs related to a radio unit (RU) connected to the DU,
the resource information includes first information and second information,
the first information indicates a start resource block of resource blocks continuously allocated to a corresponding UE in the resource area, and
the first information and the second information are used to indicate the resource blocks continuously allocated to the corresponding UE.

12. The device of claim 11, wherein the section extension information is used for demodulation reference signal-beamforming-equalizing (DMRS-BF-EQ) or DMRS beamforming-nonequalizing (DMRS-BF-NEQ).

13. The device of claim 12, wherein operations for the DMRS-BF-EQ or the DMRS-BF-NEQ in the RU includes a DMRS extraction and a DMRS channel estimation, and
wherein operations for the DMRS-BF-EQ or the DMRS-BF-NEQ in the DU includes a layer demapping and a decoding.

14. The device of claim 11, wherein the second information includes information for identifying the number of the resource blocks continuously allocated to the corresponding UE.

15. A device for performing functions of a radio unit (RU), comprising:
at least one fronthaul transceiver including communication circuitry;
at least one processor including processing circuitry; and
memory storing instructions, including one or more storage media,
wherein the instructions, when executed by the at least one processor individual or collectively, cause the device to:
receive, from a distributed unit (DU), a control plane (C-plane) message including section information for indicating a resource area and section extension information, wherein:
the section extension information includes resource information allocated for each user equipment (UE) of a plurality of UEs related to a radio unit (RU) connected to the DU,
the resource information includes first information and second information,
the first information indicates a start resource block of resource blocks continuously allocated to a corresponding UE in the resource area, and
the first information and the second information are used to indicate the resource blocks continuously allocated to the corresponding UE; and
perform, based on the resource information allocated for each user equipment (UE), an uplink (UL) communication.
